# EUROPÄISCHE PATENTSCHRIFT

(11) **EP 3 239 403 B1**
(45) Veröffentlichungstag und Bekanntmachung des Hinweises auf die Patenterteilung: **09.01.2019**
(21) Anmeldenummer: 17000625.8
(22) Anmeldetag: 12.04.2017
(51) Int. Cl.: E01H 1/08

(54) **RÜCKENGETRAGENES ARBEITSGERÄT MIT EINEM ANTRIEBSMOTOR UND EINEM VON DEM ANTRIEBSMOTOR ANGETRIEBENEN GEBLÄSE**
WORKING DEVICE WITH A DRIVE MOTOR WORN ON THE BACK AND A FAN DRIVEN BY THE DRIVE MOTOR
APPAREIL DE TRAVAIL DORSAL COMPRENANT UN MOTEUR D'ENTRAÎNEMENT ET UN VENTILATEUR ENTRAÎNÉ PAR LE MOTEUR D'ENTRAÎNEMENT

(30) Priorität: 27.04.2016 DE 102016005099
(43) Veröffentlichungstag der Anmeldung: 01.11.2017
(73) Patentinhaber: Andreas Stihl AG & Co. KG, 71336 Waiblingen (DE)
(72) Erfinder: VON KRANE, Florian, D-71737 Kirchberg (DE); GINDELE, Cornelius, D-73207 Plochingen (DE); BARTH, Christian, D-71404 Korb (DE); SCHELLIN, Kirsten, D-73614 Schorndorf (DE)
(74) Vertreter: Reinhardt, Annette

(56) Entgegenhaltungen:
- EP-A2- 2 684 446
- JP-A- 2008 063 779
- US-A1- 2001 002 501

## Beschreibung

Die Erfindung betrifft ein rückengetragenes Arbeitsgerät mit einem Antriebsmotor und mit einem von dem Antriebsmotor angetriebenen Gebläse der im Oberbegriff des Anspruchs 1 angegebenen Gattung.

Aus der JP 2008-063779 A ist ein rückengetragenes Arbeitsgerät, nämlich ein rückengetragenes Blasgerät bekannt. An der Rückentrage des Blasgeräts sind ein Gebläse sowie ein Antriebsmotor zum Antrieb des Gebläses festgelegt. Die Arbeitsluft wird durch eine Durchtrittsöffnung in der Bodenplatte der Rückentrage angesaugt. An der Durchtrittsöffnung sind Rippen vorgesehen, die ein Ansaugen von Blättern zum Gebläse verhindern.

Es hat sich gezeigt, dass sich eine solche Durchtrittsöffnung an der Unterseite der Bodenplatte im Betrieb zusetzen kann, beispielsweise durch angesaugte Blätter. Dann ist keine ausreichende Versorgung des Arbeitsgeräts mit Arbeitsluft mehr gegeben.

Der Erfindung liegt die Aufgabe zugrunde, ein rückengetragenes Arbeitsgerät der gattungsgemäßen Art zu schaffen, das eine ausreichende Versorgung mit Arbeitsluft gewährleistet.

Diese Aufgabe wird durch ein rückengetragenes Arbeitsgerät mit den Merkmalen des Anspruchs 1 gelöst.

Die Erfindung sieht vor, an der Unterseite der Bodenplatte mindestens eine Ansaugöffnung auszubilden, über die der Arbeitsluftstrom von dem Gebläse aus der Umgebung durch die mindestens eine Durchtrittsöffnung durch die Bodenplatte hindurch gesaugt wird. Um zu vermeiden, dass die mindestens eine Durchtrittsöffnung durch angesaugte Blätter oder dgl. verschlossen werden kann, ist vorgesehen, an der Unterseite der Bodenplatte Rippen anzuordnen, deren der Oberseite abgewandt liegende Stirnseiten eine Anlagefläche für angesaugte Blätter bilden. Die mindestens eine Ansaugöffnung liegt zwischen den Stirnseiten der Rippen in der Anlagefläche. Die mindestens eine Ansaugöffnung ist durch mindestens eine auf der dem Gebläse zugewandten Seite der Anlagefläche liegende Strömungsverbindung mit der mindestens einen Durchtrittsöffnung verbunden. Die Ansaugöffnungen bilden eine Ansaugfläche. Um ein Zusetzen der Ansaugöffnung mit angesaugten Blättern oder dgl. weitgehend zu vermeiden, ist vorgesehen, dass die Ansaugfläche mindestens 50% der Fläche der Unterseite der Bodenplatte beträgt.

Die Durchtrittsöffnung ist eine Öffnung in der Bodenplatte, die eine Strömung zwischen Unterseite und Oberseite der Bodenplatte durch die Bodenplatte hindurch ermöglicht. Die mindestens eine Durchtrittsöffnung wird durch einen Ausbruch, also eine Reduzierung von Material in der Bodenplatte ermöglicht. Die Anlagefläche ist die geometrische Fläche, die durch die Stirnseiten der Rippen aufgespannt wird. Die Anlagefläche muss dabei keine ebene Fläche sein, sondern kann je nach Anordnung der Rippen abschnittsweise bogenförmig oder stufenförmig ausgebildet sein.

Sind mehrere Ansaugöffnungen vorgesehen, so sind diese Ansaugöffnungen vorteilhaft durch die Stirnseite von mindestens einer Rippe unterbrochen. Es hat sich gezeigt, dass Rippen mit einer Breite bis zu 10 mm die Ansaugung nur unwesentlich beeinträchtigen. Für die Größe der Ansaugfläche werden diese Rippen deshalb mit berücksichtigt. Die Ansaugfläche ist die Summe des Flächeninhalts aller Ansaugöffnungen zuzüglich der Fläche der Stirnseiten von zwischen Ansaugöffnungen verlaufenden Rippen, die eine Breite von weniger als 10 mm haben. Rippen mit einer Breite von mehr als 10 mm werden nicht zur Ansaugfläche hinzugerechnet. Als Ansaugöffnungen werden dabei Öffnungen bezeichnet, die in der Anlagefläche liegen und die durch mindestens eine auf der dem Gebläse zugewandten Seite der Anlagefläche liegende Strömungsverbindung mit der mindestens einen Durchtrittsöffnung verbunden sind. Die Ansaugöffnungen münden dabei vorteilhaft in einen Bereich zwischen Rippen der Bodenplatte. Bei Öffnungen, die nur teilweise in der Anlagefläche liegen, wird nur der in der Anlagefläche liegende Bereich als Ansaugöffnung betrachtet. Öffnungen, die außerhalb der Anlagefläche angeordnet sind oder nicht durch eine auf der dem Gebläse zugewandten Seite der Anlagefläche liegende Strömungsverbindung mit der mindestens einen Durchtrittsöffnung verbunden sind, stellen keine Ansaugöffnungen im Sinne der vorliegenden Erfindung dar.

Dadurch, dass die Ansaugfläche sehr groß ist, ist der Sog an einer einzelnen Ansaugöffnung gering, und ein Zusetzen der Ansaugfläche durch Blätter oder dgl. kann weitgehend vermieden werden. Dadurch, dass jede Ansaugöffnung der Ansaugfläche durch eine Strömungsverbindung mit der mindestens einen Durchtrittsöffnung verbunden ist, die auf der dem Gebläse zugewandten Seite der Anlagefläche liegt, kann Arbeitsluft auch bei teilweise verschlossener Ansaugfläche durch die verbleibenden offenen Ansaugöffnungen zur Durchtrittsöffnung angesaugt werden. Die Strömungsverbindung liegt dabei über ihre gesamte Länge auf der dem Gebläse zugewandten Seite der Anlagefläche. Durch die gegenüber bekannten Blasgeräten vergrößerte Ansaugfläche kann angesaugtes Laub oder dgl. leicht wieder abfallen, da bei geringer Leistung des Antriebsmotors, beispielsweise im Leerlauf, kein ausreichender Unterdruck erzeugt wird, um die Blätter an der Ansaugfläche zu halten. Das Abfallen der Blätter wird durch die Lage der Ansaugfläche an der Unterseite der Bodenplatte durch die Schwerkraftwirkung begünstigt.

Der Anteil der Summe der Flächen der Ansaugöffnungen an der Ansaugfläche beträgt vorteilhaft mindestens ein Drittel, insbesondere mindestens die Hälfte der Ansaugfläche. Die Summe der Flächen der Stirnseiten von Rippen, die für die Berechnung der Ansaugfläche berücksichtigt werden, beträgt vorteilhaft weniger als zwei Drittel, insbesondere weniger als die Hälfte der Ansaugfläche. Die für die Berechnung der Ansaugfläche zu berücksichtigenden Stirnseiten von Rippen sind dabei Stirnseiten mit einer Breite von weniger als 10 mm, die zwischen Ansaugöffnungen liegen.

Das Verhältnis der Ansaugfläche zur Summe der Querschnittsflächen aller Durchtrittsöffnungen beträgt vorteilhaft von 1 bis 5. Die Ansaugfläche beträgt dabei vorteilhaft mindestens ein Drittel der Fläche der Unterseite der Bodenplatte. Bei einem Verhältnis der Ansaugfläche zur Summe der Querschnittsflächen aller Durchtrittsöffnungen von 1 besitzen vorteilhaft alle Ansaugöffnungen eine direkte Verbindung auf die Oberseite der Bodenplatte. Die Durchtrittsöffnungen können dabei die Ansaugöffnungen vorteilhaft vollständig überdecken. Bei einem Verhältnis von 5 ist die Ansaugfläche deutlich größer als die Summe der Querschnittsflächen aller Durchtrittsöffnungen. Dies ist insbesondere bei sehr großer Ansaugfläche und vergleichsweise kleiner Querschnittsfläche der Durchtrittsöffnungen gegeben. In diesem Fall ist insbesondere nur eine Durchtrittsöffnung vorgesehen.

Bevorzugt beträgt die Ansaugfläche 70% bis 100% der Fläche der Unterseite der Bodenplatte. Die Ansaugfläche kann sehr groß gewählt werden, da die Ansaugöffnungen den Raum zwischen vorhandenen Versteifungsstrukturen, nämlich von Rippen an der Unterseite der Bodenplatte, nutzen können, so dass keine Schwächung der Bodenplatte durch Materialreduktion erfolgen muss. Bis auf die für eine ausreichende Stabilität der Anlagefläche benötigten Rippen erstreckt sich die Ansaugfläche vorteilhaft weitgehend vollständig über die Unterseite der Bodenplatte. Die Unterseite der Bodenplatte ist dabei die bei einer Ansicht auf die Bodenplatte von unten sichtbare Seite. Die Fläche der Unterseite bezeichnet den Flächeninhalt, der sich bei einer lotrechten Projektion der Unterseite auf die ebene, horizontale Abstellfläche ergibt. Der Strömungsquerschnitt der mindestens einen Durchtrittsöffnung ist vorteilhaft deutlich kleiner als die Ansaugfläche. Dadurch kann eine ausreichend hohe Stabilität der Bodenplatte erreicht werden. Die Summe der Querschnittsflächen aller Durchtrittsöffnungen beträgt vorteilhaft von 20% bis 80% der Fläche der Unterseite der Bodenplatte. Bevorzugt beträgt die Summe der Querschnittsflächen aller Durchtrittsöffnungen von 25% bis 70% der Fläche der Unterseite der Bodenplatte.

Vorteilhaft ist eine Durchtrittsöffnung eine Hauptdurchtrittsöffnung. Die Hauptdurchtrittsöffnung ist dabei die Durchtrittsöffnung, durch die der größte Anteil von Arbeitsluft von der Unterseite auf die Oberseite der Bodenplatte gesaugt wird. Ist nur eine Durchtrittsöffnung vorhanden, so ist diese Durchtrittsöffnung die Hauptdurchtrittsöffnung, da durch diese Durchtrittsöffnung die gesamte Arbeitsluft von der Unterseite auf die Oberseite der Bodenplatte gesaugt wird. Sind mehrere Durchtrittsöffnungen in der Bodenplatte vorgesehen, so ist die Hauptdurchtrittsöffnung die Durchtrittsöffnung, durch die der größte Anteil von Arbeitsluft strömt. Die Hauptdurchtrittsöffnung ist demnach bevorzugt die Durchtrittsöffnung mit dem größten freien Strömungsquerschnitt. Die Hauptdurchtrittsöffnung ist insbesondere der größte eine Durchtrittsöffnung bildende Ausbruch der Bodenplatte, wobei der Querschnitt der Durchtrittsöffnung dem Querschnitt des Ausbruchs entspricht. Ein eine Durchtrittsöffnung abdeckendes Gitter bleibt bei der Ermittlung der Hauptdurchtrittsöffnung vorteilhaft außer Betracht. Die Ansaugfläche ist vorteilhaft mindestens doppelt so groß wie der Querschnitt der Hauptdurchtrittsöffnung. Die Ansaugfläche ist demnach deutlich größer als der Querschnitt der Hauptdurchtrittsöffnung. Bevorzugt ist die Ansaugfläche mindestens 2,5mal so groß wie der Querschnitt der Hauptdurchtrittsöffnung.

Das Gebläse besitzt eine Gebläsespirale, in die der Arbeitsluftstrom gefördert wird. Die Gebläsespirale taucht vorteilhaft in die Hauptdurchtrittsöffnung ein. Die Hauptdurchtrittsöffnung ist demnach die Durchtrittsöffnung, in die die Gebläsespirale teilweise ragt. Die Gebläsespirale verringert damit den freien Strömungsquerschnitt der Hauptdurchtrittsöffnung.

Das Gebläse besitzt eine der Rückenplatte zugewandte Eintrittsöffnung. Zwischen der Rückenplatte und der Eintrittsöffnung ist vorteilhaft ein Zwischenraum gebildet. Die durch die Hauptdurchtrittsöffnung angesaugte Arbeitsluft tritt vorteilhaft aus der Hauptdurchtrittsöffnung unmittelbar in den Zwischenraum zwischen der Rückenplatte und der Eintrittsöffnung ein. Der Zwischenraum schließt demnach an die Hauptdurchtrittsöffnung an. Die Hauptdurchtrittsöffnung ist vorteilhaft näher an der Rückenplatte angeordnet als an der der Rückenplatte abgewandten Seite der Bodenplatte.

Zur Ansaugung von Arbeitsluft ist an der Unterseite der Bodenplatte vorteilhaft mindestens ein Kanal gebildet. Der Kanal ist bevorzugt zur Unterseite vollständig oder mindestens teilweise offen. Der Kanal ist mindestens teilweise von den Rippen begrenzt. An der der Unterseite der Bodenplatte zugewandten Seite des Kanals ist mindestens eine Ansaugöffnung angeordnet. Die Ansaugöffnung mündet dabei vorteilhaft derart in den Kanal, dass durch die Ansaugöffnung eintretende Arbeitsluft durch den Kanal zur Hauptdurchtrittsöffnung gesaugt wird. Vorteilhaft liegt der Kanal unmittelbar benachbart zur Unterseite der Bodenplatte, und es münden mehrere Ansaugöffnungen in die an der Unterseite angeordnete Längsseite des Kanals. Bei einem vollständig zur Unterseite hin offenen Kanal bildet die in der Anlagefläche liegende Längsseite des Kanals die Ansaugöffnung. Der Kanal verläuft vorteilhaft in Richtung auf die Hauptdurchtrittsöffnung. Die Länge der der Unterseite zugewandten Seite des Kanals beträgt vorteilhaft mindestens 5 cm. Bevorzugt beträgt die Länge der an der Unterseite der Bodenplatte verlaufenden Seite des Kanals mindestens 8 cm. Blätter oder dgl. angesaugtes Gut sind üblicherweise kleiner und können die an der Unterseite der Bodenplatte verlaufende Längsseite des Kanals nicht vollständig verschließen. Dadurch kann trotz an der Unterseite der Bodenplatte angeordnetem Gut über den Kanal Arbeitsluft zur Hauptdurchtrittsöffnung gefördert werden. Der Kanal besitzt vorteilhaft eine Breite von mindestens 10 mm, insbesondere mindestens 20 mm. Dadurch kann vermieden werden, dass Blätter oder dgl. in den Kanal gesaugt werden können. Um zu vermeiden, dass sich angesaugte Blätter in den Kanal wölben und den Kanal weitgehend verschließen, ist vorteilhaft vorgesehen, dass der Kanal eine Tiefe von mindestens 5 mm, insbesondere mindestens 10 mm besitzt.

Der Kanal besitzt vorteilhaft mindestens eine Mündungsöffnung, über die der Kanal mit der Hauptdurchtrittsöffnung verbunden ist. Der Strömungsquerschnitt der Mündungsöffnung beträgt dabei vorteilhaft höchstens 50% der Fläche der an diesem Kanal angeordneten Ansaugöffnungen. Der Strömungsquerschnitt der Mündungsöffnung ist demnach deutlich kleiner als die Fläche der Ansaugöffnungen. Die Mündungsöffnung ist bevorzugt an einer Umfangswand der Hauptdurchtrittsöffnung angeordnet. Die durch den Kanal angesaugte Arbeitsluft tritt demnach durch die Mündungsöffnung in der Umfangswand in die Hauptdurchtrittsöffnung ein. Es kann jedoch auch vorgesehen sein, dass die Mündungsöffnung auf der Oberseite der Bodenplatte angeordnet ist und an der Oberseite der Bodenplatte mit der Durchtrittsöffnung strömungsverbunden ist. Alternativ oder zusätzlich kann auch eine unterhalb, also an der der Unterseite zugewandten Seite der Umfangswand der Hauptdurchtrittsöffnung angeordnete Mündungsöffnung vorgesehen sein.

Das Arbeitsgerät besitzt vorteilhaft eine Abstellposition, in der das Arbeitsgerät auf einer ebenen, horizontalen Abstellfläche abgestellt ist. Vorteilhaft steht das Arbeitsgerät mit der Bodenplatte, insbesondere mit an der Bodenplatte angeordneten Stellfüßen, auf der Abstellfläche auf. In Abstellposition liegt in einer Projektion senkrecht auf die Abstellfläche vorteilhaft mindestens eine Ansaugöffnung mindestens teilweise außerhalb einer Durchtrittsöffnung. Die mindestens eine Ansaugöffnung liegt vorteilhaft mindestens teilweise außerhalb der Hauptdurchtrittsöffnung. Die Arbeitsluft wird demnach bezogen auf die Lage des Arbeitsgeräts in Abstellposition nicht ausschließlich senkrecht von unten angesaugt, sondern auch von Bereichen, die seitlich außerhalb der Durchtrittsöffnung liegen, so dass eine mehrfache Umlenkung des Arbeitsluftstroms erforderlich ist. Dadurch, dass mindestens eine Ansaugöffnung mindestens teilweise außerhalb der zugeordneten Durchtrittsöffnung liegt, kann auf einfache Weise eine große Ansaugfläche gebildet werden. Die Anlagefläche ist bevorzugt nahe an der Abstellfläche ausgebildet. Blätter oder dgl. werden dadurch nicht in die Bodenplatte hineingesaugt, sondern bleiben nahe an der Unterseite der Bodenplatte hängen. Vorteilhaft beträgt der Abstand der Anlagefläche in Abstellposition zur Abstellfläche an jeder Stelle der Anlagefläche weniger als 20 mm. Bevorzugt beträgt der Abstand weniger als 10 mm. Der Abstand zwischen Anlagefläche und Abstellfläche ist dabei senkrecht zur Abstellfläche an der Stelle, die den größten Abstand zwischen Anlagefläche und Abstellfläche aufweist, gemessen.

Vorteilhaft ist der Antriebsmotor ein Verbrennungsmotor. Ein Teil des durch die Anlagefläche angesaugten Kühlluftstroms wird vorteilhaft zur Kühlung des Verbrennungsmotors abgezweigt. Dadurch ist kein zusätzliches Gebläse zur Förderung von Kühlluft für den Verbrennungsmotor notwendig. Aufgrund der großen Ansaugfläche kann auf einfache Weise eine ausreichende Kühlung des Verbrennungsmotors sichergestellt werden.

Der Kühlluftstrom zur Kühlung des Verbrennungsmotors wird vorteilhaft aus der Gebläsespirale abgezweigt.

Das Arbeitsgerät besitzt vorteilhaft einen Betriebsmitteltank, der in Abstellposition oberhalb der Bodenplatte und auf der der Rückenplatte abgewandten Seite des Gebläses angeordnet ist.

Vorteilhaft ist eine Durchtrittsöffnung eine Nebendurchtrittsöffnung. Eine Nebendurchtrittsöffnung ist dabei insbesondere eine Durchtrittsöffnung, durch die nicht der größte Anteil der durch die Bodenplatte angesaugten Verbrennungsluft angesaugt wird. Vorteilhaft ist mindestens eine Nebendurchtrittsöffnung in dem in Abstellposition unterhalb des Betriebsmitteltanks angeordneten Bereich angeordnet. Dadurch kann Arbeitsluft auch in dem unterhalb des Betriebsmitteltanks angeordneten Bereichs durch die Bodenplatte hindurchtreten.

Vorteilhaft besitzt der Betriebsmitteltank eine Form, die ein Entlangströmen der angesaugten Arbeitsluft zwischen Bodenplatte und Betriebsmitteltank erlaubt. Bevorzugt ist eine Vielzahl von Nebendurchtrittsöffnungen unter dem Betriebsmitteltank vorgesehen.

Um auch ein Ansaugen von Arbeitsluft am Umfang der Bodenplatte zu ermöglichen, ist vorteilhaft vorgesehen, dass mindestens eine Ansaugöffnung sich bis an eine Umfangswand der Bodenplatte erstreckt.

Vorteilhaft ist der Verbrennungsmotor in einem in Abstellposition oberhalb des Betriebsmitteltanks angeordneten Motorgehäuse angeordnet. Das Motorgehäuse bildet dabei insbesondere einen Teil des Gehäuses des Arbeitsgeräts. Zwischen dem Motorgehäuse und dem Betriebsmitteltank ist vorteilhaft mindestens ein Spalt zur Ansaugung von Arbeitsluft gebildet.

Das Arbeitsgerät besitzt im Bereich zwischen dem Gebläse und der Rückentrage vorteilhaft mindestens eine Öffnung zur Ansaugung von Arbeitsluft, die in den Zwischenraum mündet. Die mindestens eine Öffnung ist dabei eine obere Öffnung.

Durch die obere Öffnung wird Arbeitsluft vorteilhaft von oberhalb der Bodenplatte angesaugt.

Der Bereich zwischen Gebläse und Rückentrage, an dem die mindestens eine obere Öffnung angeordnet ist, grenzt vorteilhaft an den Umfang der Rückenplatte an. Dadurch, dass an unterschiedlichen Bereichen des Arbeitsgeräts Öffnungen zur Ansaugung von Arbeitsluft vorgesehen sind, kann insgesamt eine große Fläche für das Ansaugen von Arbeitsluft aus der Umgebung zur Verfügung gestellt werden, wodurch die Gefahr eines Zusetzens der gesamten Fläche mit Blättern oder dgl. verringert ist. Setzt sich die mindestens eine obere Öffnung zu, beispielsweise durch herabfallendes Laub, so ist eine ausreichende Kühlung des Antriebsmotors durch die mindestens eine Ansaugöffnung an der Unterseite der Bodenplatte sichergestellt.

Ausführungsbeispiele der Erfindung werden im Folgenden anhand der Zeichnung erläutert. Es zeigen:
- Fig. 1: eine schematische Seitenansicht eines rückengetragenen Blasgeräts,
- Fig. 2: eine schematische Schnittdarstellung entlang der Linie II-II in Fig. 1,
- Fig. 3: eine schematische Schnittdarstellung entlang der Linie III-III in Fig. 1,
- Fig. 4: eine vergrößerte Darstellung des Bereichs der Bodenplatte aus Fig. 3,
- Fig. 5: eine perspektivische Darstellung des Blasgeräts von unten,
- Fig. 6: eine Ansicht auf die Bodenplatte von der dem Antriebsmotor zugewandten Seite,
- Fig. 7: eine Ansicht des Oberteils der Bodenplatte von der dem Antriebsmotor abgewandten Seite,
- Fig. 8: eine Ansicht auf das Unterteil der Bodenplatte von der dem Antriebsmotor abgewandten Seite,
- Fig. 9 und 10: perspektivische Darstellungen des Unterteils der Bodenplatte von der dem Antriebsmotor zugewandten Seite,
- Fig. 11: eine ausschnittsweise Schnittdarstellung entlang der Linie XI-XI in Fig. 4,
- Fig. 12: eine perspektivische Darstellung eines Ausführungsbeispiels eines Blasgeräts,
- Fig. 13: eine perspektivische ausschnittsweise Darstellung des Bereichs der Bodenplatte des Blasgeräts aus Fig. 12,
- Fig. 14: eine ausschnittsweise Schnittdarstellung durch den Bereich der Bodenplatte des Blasgeräts aus den Figuren 12 und 13,
- Fig. 15: eine ausschnittsweise schematische Schnittdarstellung von Rückentrage und Kraftstofftank des Blasgeräts aus den Figuren 12 bis 14,
- Fig. 16: eine schematische Schnittdarstellung entlang der Linie XVI-XVI in Fig. 15,
- Fig. 17: eine Ansicht auf die Bodenplatte des Blasgeräts von unten,
- Fig. 18: eine Ansicht auf die Bodenplatte des Blasgeräts von oben,
- Fig. 19: eine perspektivische Darstellung der Rückentrage des Blasgeräts.

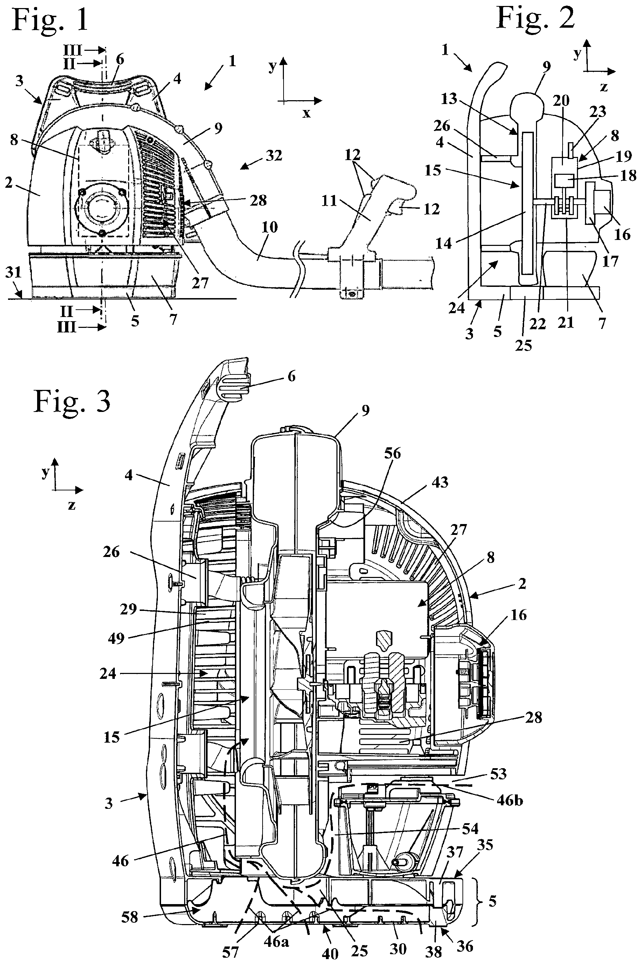

Fig. 1 zeigt als Ausführungsbeispiel für ein rückengetragenes Arbeitsgerät ein Blasgerät 1. Der Aufbau des Blasgeräts 1 ist in den Figuren 1 und 2 schematisch dargestellt. Das Blasgerät 1 besitzt eine Rückentrage 3, an der ein Gehäuse 2 festgelegt ist. Die Rückentrage 3 umfasst eine Rückenplatte 4, die im üblichen Betrieb, also wenn der Bediener die Rückentrage 3 nach Art eines Rucksacks auf den Schultern trägt, etwa senkrecht verläuft, sowie eine Bodenplatte 5, die im üblichen Betrieb etwa horizontal angeordnet ist. In Fig. 1 ist das Blasgerät 1 in einer Abstellposition 32 gezeigt, in der das Blasgerät 1 auf einer ebenen, horizontalen Abstellfläche 31 abgestellt ist. Dabei ist die Bodenplatte 5 benachbart zur Abstellfläche 31 angeordnet. An der in Abstellposition 32 oben liegenden Seite der Rückenplatte 4 ist ein Traggriff 6 vorgesehen, der im Ausführungsbeispiel integral mit der Rückenplatte 4 ausgebildet ist. An der Bodenplatte 5 ist ein Betriebsmitteltank 7 gehalten.

Im Gehäuse 2 ist ein Antriebsmotor 8 angeordnet, der im Ausführungsbeispiel als Verbrennungsmotor ausgebildet ist. Das Blasgerät 1 besitzt eine Gebläsespirale 9, durch die vom Antriebsmotor 8 ein Arbeitsluftstrom gefördert wird. An die Gebläsespirale 9 schließt ein Blasrohr 10 an. Am Blasrohr 10 ist ein Handgriff 11 angeordnet, mit dem der Bediener das Blasrohr 10 führen kann. Am Handgriff 11 sind Bedienelemente 12, nämlich ein Gashebel, eine Gashebelsperre sowie ein Stoppschalter angeordnet. Es können auch weitere oder andere Bedienelemente 12 vorgesehen sein. Zur vereinfachten Darstellung ist in Fig. 1 ein Koordinatensystem eingezeichnet. Die x-Achse verläuft in Abstellposition 32 horizontal und im Ausführungsbeispiel parallel zur Bodenplatte 5. Die y-Achse verläuft in Abstellposition 32 senkrecht nach oben. Die Rückenplatte 4 erstreckt sich etwa in Richtung der y-Achse. Um einen hohen Tragekomfort zu erreichen, ist die Rückenplatte 4 vorteilhaft als geschwungene Freiformfläche ausgebildet. Wie Fig. 1 auch zeigt, besitzt das Gehäuse 2 vordere Ausblasöffnungen 27 sowie seitliche Ausblasöffnungen 28, deren Funktion im Folgenden noch näher beschrieben wird. Die vorderen Ausblasöffnungen 27 sind an der der Rückenplatte 4 abgewandten Seite des Gehäuses 2 angeordnet.

Fig. 2 zeigt schematisch den Aufbau der Antriebseinheit des Blasgeräts 1. An der Rückentrage 3 ist ein Gebläse 13 über Befestigungselemente 26 festgelegt. Das Gebläse 13 ist im Ausführungsbeispiel an der Rückenplatte 4 der Rückentrage 3 festgelegt. Die Befestigungselemente 26 sind vorteilhaft Antivibrationselemente, die eine Schwingungsentkopplung des Gebläses 13 von der Rückentrage 3 bewirken. Fig. 2 zeigt das Blasgerät 1 in einer Schnittdarstellung, in der die y-Achse senkrecht und die z-Achse von der Rückentrage 3 in Richtung zum Antriebsmotor 8 gerichtet ist. Die z-Achse verläuft parallel zur Abstellfläche 31 (Fig. 1).

Das Gebläse 13 umfasst ein Gebläserad 14, das in der Gebläsespirale 9 angeordnet ist. Das Gebläserad 14 ist um eine Drehachse 52 rotierend angetrieben und als radial wirkendes Gebläserad ausgebildet. Das Gebläserad 14 saugt Arbeitsluft über eine stirnseitig am Gebläserad 14 angeordnete Eintrittsöffnung 15 an und fördert die Arbeitsluft in die Gebläsespirale 9 und von dort in das Blasrohr 10 (Fig. 1). In Fig. 2 ist auch der Antriebsmotor 8 schematisch gezeigt. Der Antriebsmotor 8 ist vorteilhaft ein Einzylindermotor, insbesondere ein Zweitaktmotor oder ein gemischgeschmierter Viertaktmotor. Der Antriebsmotor 8 besitzt einen Zylinder 19, in dem ein Brennraum 20 ausgebildet ist. In den Brennraum 20 ragt eine Zündkerze 23. Im Zylinder 19 ist ein Kolben 18 hin- und hergehend angetrieben, der eine in einem Kurbelgehäuse 21 um die Drehachse 52 drehbar gelagerte Kurbelwelle 22 antreibt. An der Kurbelwelle 22 ist das Gebläserad 14 drehfest festgelegt. An der dem Gebläserad 14 gegenüberliegenden Seite des Antriebsmotors 8 ist an der Kurbelwelle 22 ein Schwungrad 17 festgelegt. Der Antriebsmotor 8 besitzt eine Anwerfvorrichtung 16, vorteilhaft einen Seilzugstarter oder eine elektrische Anwerfvorrichtung. Die Anwerfvorrichtung 16 wirkt mit dem Schwungrad 17 zusammen und treibt das Schwungrad 17 und damit die Kurbelwelle 22 beim Anwerfen des Antriebsmotors 8 rotierend an. Der Antriebsmotor 8 ist in einem Motorgehäuse 43 angeordnet, das einen Teil des Gehäuses 2 bildet. Im Ausführungsbeispiel ist unterhalb des Motorgehäuses 43 der Betriebsmitteltank 7 angeordnet. Auch eine andere Anordnung des Betriebsmitteltanks 7 kann vorteilhaft sein.

Wie Fig. 2 auch zeigt, ist zwischen der Gebläsespirale 9 und der Rückentrage 3 ein Zwischenraum 24 gebildet. Im Ausführungsbeispiel ist der Zwischenraum 24 zwischen der Gebläsespirale 9 und der Rückenplatte 4 der Rückentrage 3 gebildet. Aus dem Zwischenraum 24 zweigt die Eintrittsöffnung 15 ab. In der Bodenplatte 5 ist eine Durchtrittsöffnung angeordnet, die als Hauptdurchtrittsöffnung 25 ausgebildet ist und durch die Arbeitsluft von einer Unterseite 36 der Bodenplatte 5 in den Zwischenraum 24 gesaugt wird. Die Unterseite 36 der Bodenplatte 5 ist die dem Gebläse 13 und dem Antriebsmotor 8 abgewandte Seite der Bodenplatte 5. In Abstellposition 32 ist die Unterseite 36 der Abstellfläche 31 zugewandt.

Wie Fig. 3 zeigt, taucht die Gebläsespirale 9 im Ausführungsbeispiel teilweise in die Hauptdurchtrittsöffnung 25 ein. Auch eine Anordnung der Gebläsespirale 9, bei der die Gebläsespirale 9 nicht in die Hauptdurchtrittsöffnung 25 eintaucht, kann vorteilhaft sein. Die Arbeitsluft wird entlang der gestrichelt eingezeichneten Pfeile 46 in die Eintrittsöffnung 15 des Gebläses 13 angesaugt. Dabei wird ein Teilluftstrom 46a von der Unterseite 36 der Bodenplatte 5 durch die Hauptdurchtrittsöffnung 25 in den Zwischenraum 24 gesaugt. Ein weiterer Teilluftstrom 46b wird durch einen zwischen dem Motorgehäuse 43 und dem Betriebsmitteltank 7 gebildeten Spalt 53 und durch einen zwischen Betriebsmitteltank 7 und Gebläsespirale 9 gebildeten Spalt 54 unter der Gebläsespirale 9 vorbei in den Zwischenraum 24 gesaugt. Dabei kann auch der Teilluftstrom 46b teilweise oder vollständig in die Hauptdurchtrittsöffnung 25 eintreten.

Wie Fig. 3 auch zeigt, sind zwischen der Rückenplatte 4 und der Gebläsespirale 9 am Gehäuse 2 obere Öffnungen 29 gebildet, durch die Arbeitsluft in den Zwischenraum 24 angesaugt werden kann. Durch die oberen Öffnungen 29 wird Arbeitsluft aus einem Bereich angesaugt, der in Abstellposition 32 und damit auch in üblicher Arbeitshaltung oberhalb der Bodenplatte 5 liegt. Die Öffnungen 29 sind an einem Abdeckgitter 49 ausgebildet, das sich zwischen Gebläsespirale 9 und der Rückenplatte 4 erstreckt und das einen Teil des Gehäuses 2 bildet.

Die Bodenplatte 5 besteht im Ausführungsbeispiel aus einem einteilig mit der Rückenplatte 4 ausgebildeten Oberteil 37 sowie einem an dem Oberteil 37 fixierten, separaten Unterteil 38. Die Bodenplatte 5 besitzt eine dem Antriebsmotor 8 und dem Gebläse 13 zugewandte Oberseite 35, die an dem Oberteil 37 ausgebildet ist. Die Bodenplatte 5 besitzt außerdem die Unterseite 36, die dem Antriebsmotor 8 und dem Gebläse 13 abgewandt liegt. Im Ausführungsbeispiel ist die Unterseite 36 an dem Unterteil 38 ausgebildet. An der Unterseite 36 sind Ansaugöffnungen 30 vorgesehen, durch die der Teilluftstrom 46a in die Hauptdurchtrittsöffnung 25 angesaugt wird. Die Ansaugöffnungen 30 sind als Öffnungen in einem Gitter 57 an der Unterseite 36 der Bodenplatte 5 gebildet. Das Gitter 57 bildet eine Anlagefläche 40 für Laub oder dgl., die verhindert, dass Laub zur Hauptdurchtrittsöffnung 25 gelangen kann. Das Gitter 57 begrenzt einen in der Bodenplatte 5 ausgebildeten Ansaugraum 58, der durch die Hauptdurchtrittsöffnung 25 mit dem Zwischenraum 24 verbunden ist.

Im Ausführungsbeispiel wird der Antriebsmotor 8 durch Kühlluft gekühlt, die aus der Gebläsespirale 9 abgezweigt wird. Hierzu besitzt die Gebläsespirale 9 an der dem Antriebsmotor 8 zugewandten Seite eine Kühlluftöffnung 56, die im Ausführungsbeispiel als schmaler Schlitz ausgebildet ist. Die Kühlluft tritt durch die Kühlluftöffnung 56 in das Motorgehäuse 43 ein. Das Motorgehäuse 43 ist der Teil des Gehäuses 2, in dem der Antriebsmotor 8 angeordnet ist. Die Kühlluft kühlt den Antriebsmotor 8 und strömt durch die Ausblasöffnungen 27 und 28 aus dem Motorgehäuse 43 aus.

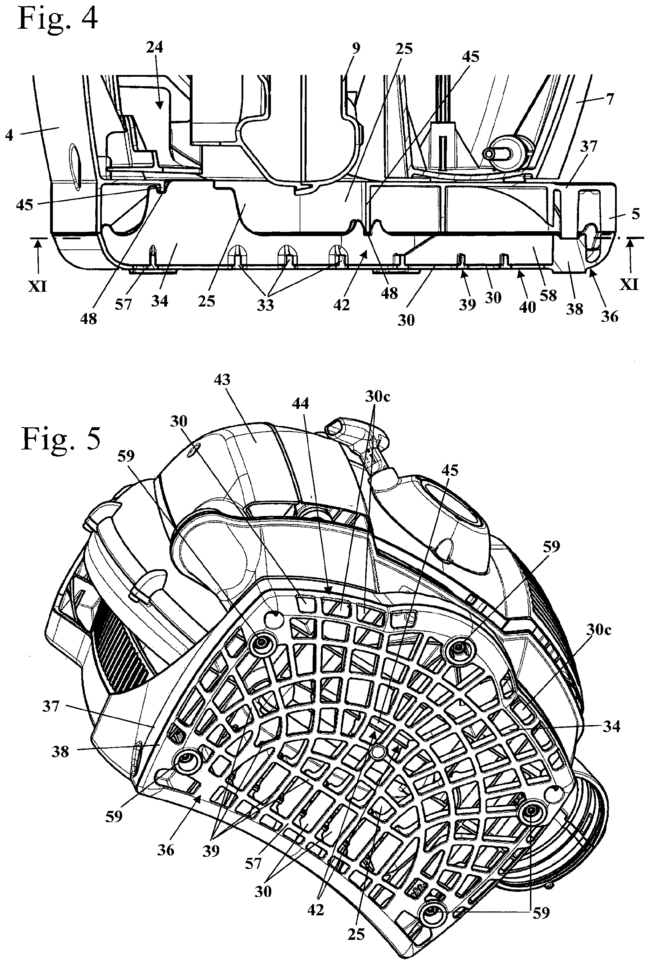

Die Figuren 4 und 5 zeigen die Gestaltung des Gitters 57 im Einzelnen. Wie Fig. 4 zeigt, besitzt das Unterteil 38 Rippen. Die Rippen sind als Querrippen 33 sowie Leitrippen 34 ausgebildet. Die Querrippen 33 verlaufen etwa quer zu den Leitrippen 34. Im Ausführungsbeispiel besitzen die Querrippen 33 eine deutlich geringere Höhe als die Leitrippen 34. Die Querrippen 33 und die Leitrippen 34 besitzen Stirnseiten 39, die an der Unterseite 36 liegen. Die Stirnseiten 39 sind die dem Gebläse 13 und dem Antriebsmotor 8 (Fig. 3) abgewandten Stirnseiten der Rippen 33 und 34. Die Stirnseiten 39 bilden das Gitter 57. Dies ist auch in Fig. 5 gezeigt. Zwischen den Rippen 33 und 34 sind die Ansaugöffnungen 30 gebildet, durch die Arbeitsluft in den Ansaugraum 58 und von dort in die Hauptdurchtrittsöffnung 25 angesaugt wird. Die Hauptdurchtrittsöffnung 25 liegt vorteilhaft zentral in der Bodenplatte 5. Die Hauptdurchtrittsöffnung 25 ist dabei insbesondere in mindestens einer Richtung außermittig angeordnet. Vorteilhaft ist die Hauptdurchtrittsöffnung 25 sowohl in z-Richtung als auch in x-Richtung außermittig angeordnet. Im Ausführungsbeispiel nach Fig. 4 ist nur eine einzige Durchtrittsöffnung durch die Bodenplatte 5 vorgesehen. Es kann jedoch auch vorgesehen sein, neben der Hauptdurchtrittsöffnung 25 weitere Durchtrittsöffnungen in der Bodenplatte 5 vorzusehen. Die Hauptdurchtrittsöffnung 25 ist an ihrem Umfang von einer Umfangswand 44 begrenzt. Die Umfangswand 44 ragt in Vertiefungen 48 der Leitrippen 34 und sichert dadurch die Lage des Unterteils 38 am Oberteil 37 der Bodenplatte 5. Wie Fig. 4 auch zeigt, besitzen die Querrippen 33 einen etwa T-förmigen Querschnitt. Auch für die Leitrippen 34 kann ein T-förmiger Querschnitt vorteilhaft sein.

Die Anlagefläche 40 wird im Ausführungsbeispiel durch die Stirnseiten 39 der Rippen 33 und 34 gebildet. Auch die Ansaugöffnungen 30 liegen in der Anlagefläche 40. Der Ansaugraum 58 liegt vollständig auf der dem Gebläse 13 zugewandten Seite der Anlagefläche 40. Dadurch ist von jeder Ansaugöffnung 30 eine Strömungsverbindung zur Hauptdurchtrittsöffnung 25 gegeben, die auf der dem Gebläse 13 zugewandten Seite der Anlagefläche 40 verläuft. Solange die Anlagefläche 40 zumindest teilweise frei von Blättern oder dgl. ist, kann Arbeitsluft in den Ansaugraum 58 und von dort in die Hauptdurchtrittsöffnung 25 und den Zwischenraum 24 angesaugt werden. Im Ausführungsbeispiel setzt sich die Anlagefläche 40 aus einer ebenen Fläche und einer an deren Rand anschließenden gewölbten Randfläche zusammen. Die Anlagefläche weist im Ausführungsbeispiel eine etwa tellerartige Gestalt auf und erstreckt sich im Unterteil 38 bis nahe an das Oberteil 37. Je nach Gestaltung der Querrippen 33 und der Leitrippen 34 kann die Anlagefläche 40 jedoch eine weitgehend beliebige Gestalt besitzen.

Wie Fig. 5 zeigt, bedecken die Ansaugöffnungen 30 den Großteil der Unterseite 36 der Bodenplatte 5. Die Unterseite 36 ist dabei die Seite der Bodenplatte 5, die in einer Seitenansicht in y-Richtung, also in Abstellposition 32 von der Abstellfläche 31 senkrecht nach oben, sichtbar ist. Wie Fig. 5 zeigt, ist das Unterteil 38 über Befestigungsschrauben 59 am Oberteil 37 fixiert. Dadurch ist eine Nachrüstung des Unterteils 38 an bestehenden Blasgeräten 1 auf einfache Weise möglich. Die Bodenplatte 5 besitzt Ansaugöffnungen 30c, die sich bis in den Bereich der Umfangswand 44 erstrecken. Die Umfangswand 40 verläuft im Ausführungsbeispiel gewölbt und weist den gewölbten Teil der Anlagefläche 40 auf, in dem die Ansaugöffnungen 30c mindestens teilweise liegen. Durch die Ansaugöffnungen 30c ist eine Ansaugung seitlich, also in der x-z-Ebene, in den Ansaugraum 58 möglich.

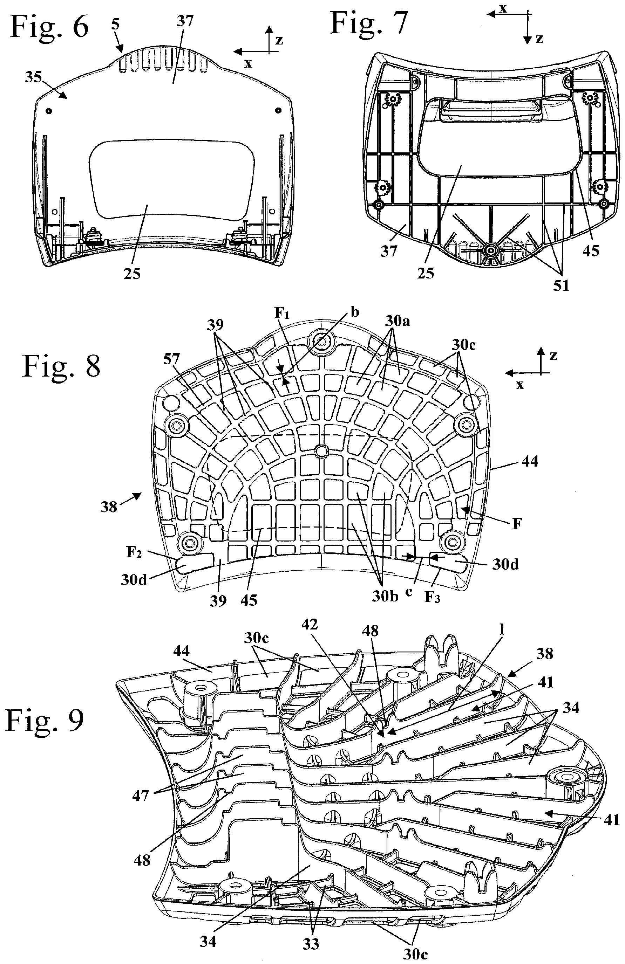

Die Figuren 6 und 7 zeigen das Oberteil 37 der Bodenplatte 5. Wie Fig. 6 zeigt, ist an der Oberseite 35 der Bodenplatte 5 nur die Hauptdurchtrittsöffnung 25 angeordnet. Weitere Durchtrittsöffnungen sind nicht vorgesehen. Es existiert damit keine weitere Strömungsverbindung in der Bodenplatte 5 zwischen Oberseite 35 und Unterseite 36 der Bodenplatte 5. Die Hauptdurchtrittsöffnung 25 ist im Bereich der Gebläsespirale 9 (Figuren 3 und 4) angeordnet. Im Bereich des Betriebsmitteltanks 7 (Fig. 4) sind keine Durchtrittsöffnungen im Oberteil 37 vorgesehen.

Fig. 7 zeigt das Oberteil 37 in einer Ansicht von unten, also von der in Abstellposition 32 der Abstellfläche 31 zugewandten Seite. Wie Fig. 7 zeigt, sind an dieser Seite des Oberteils 37 Versteifungsrippen 51 vorgesehen. Die Versteifungsrippen 51 weisen über ihre Länge und untereinander etwa die gleiche Höhe auf. Die Versteifungsrippen 51 enden in Abstellposition 32 (Fig. 1) oberhalb der Unterkante der Umfangswand 45 der Hauptdurchtrittsöffnung 25 oder auf der gleichen Höhe mit der Unterkante der Umfangswand 45 der Hauptdurchtrittsöffnung 25. Die jeweils von den Versteifungsrippen 51 umschlossenen Toträume sind in Abstellposition 32 weiter von der Abstellfläche 31 entfernt angeordnet als die Unterkante der Umfangswand 45 der Hauptdurchtrittsöffnung 25. In keiner Schnittebene, die die Versteifungsrippen 51 schneidet und die von der x-Richtung und der z-Richtung aufgespannt ist, liegt eine Strömungsverbindung zwischen einem von den Versteifungsrippen 51 umschlossenen Totraum und der Hauptdurchtrittsöffnung 25. Legen sich bei einem Blasgerät, das kein Unterteil 38 besitzt, Blätter oder dgl. an die Versteifungsrippen 51, so kann die Arbeitsluft nicht durch die zwischen den Versteifungsrippen 51 gebildeten Räume in die Hauptdurchtrittsöffnung 25 übertreten, da die Umfangswand 44 der Hauptdurchtrittsöffnung 25 den Strömungsweg versperrt.

Fig. 8 zeigt die Lage der Ansaugöffnungen 30 am Unterteil 38 der Bodenplatte 5. Die Ansaugöffnungen 30 umfassen Ansaugöffnungen 30a, die in der gezeigten Ansicht in y-Richtung außerhalb der Umfangswand 45 der Hauptdurchtrittsöffnung 25 liegen. Die Ansaugöffnungen 30 umfassen außerdem zweite Ansaugöffnungen 30b, die in der Projektion der Umfangswand 45, also in Überdeckung zur Hauptdurchtrittsöffnung 25 liegen. Außerdem sind dritte Ansaugöffnungen 30c vorgesehen, die an die Umfangswand 44 der Bodenplatte 5 angrenzen. Die zwischen den Ansaugöffnungen 30a, 30b und 30c verlaufenden Stirnseiten 39 von Rippen besitzen eine Breite b, die weniger als 10 mm beträgt. Die Breite b kann dabei unterschiedlich sein oder sich über die Länge einer Stirnseite 39 ändern. Die Ansaugöffnungen 30 umfassen außerdem Ansaugöffnungen 30d, die im Ausführungsbeispiel nahe der Rückenplatte 4 (Fig. 5) angeordnet sind und die von den Ansaugöffnungen 30a über Stirnseite 39 getrennt sind, deren Breite c größer als 10 mm ist.

Wie Fig. 8 zeigt, bedecken die Ansaugöffnungen 30 einen Großteil der Fläche der Unterseite 36 der Bodenplatte 5. Die Summe der Flächen aller Ansaugöffnungen 30a, 30b, 30c und 30d, also aller Öffnungen an der Unterseite 36, die über Strömungsverbindungen oberhalb der Anlagefläche 40 mit der Hauptdurchtrittsöffnung 25 verbunden sind, bilden eine Ansaugfläche F. Auch Stirnseiten 39 mit einer Breite b von weniger als 10 mm werden zur Ansaugfläche F gerechnet. Die Ansaugfläche F bezeichnet damit den freien Strömungsquerschnitt durch die Anlagefläche 40 zuzüglich der Fläche von Stirnseiten 39 von Leitrippen 34 und Querrippen 33, die zwischen Ansaugöffnungen 30 liegen und eine Breite b von weniger als 10 mm besitzen. Ansaugöffnungen 30d, die von weiteren Ansaugöffnungen 30a durch Stirnseiten 39 mit einer Breite c von mehr als 10 mm getrennt sind, werden zur Ansaugfläche F dazugerechnet, die entsprechenden Stirnseiten 39 bleiben jedoch außer Betracht. Im Ausführungsbeispiel ist eine erste Teilfläche F₁ vorgesehen, die eine Vielzahl Ansaugöffnungen 30a, 30b und 30c und von Stirnseiten 39 mit umfasst und die in Fig. 8 mit gestrichelter Linie eingezeichnet ist. Es sind zwei Ansaugöffnungen 30d vorgesehen, die von der ersten Teilfläche F₁ über Stirnseiten 39 getrennt sind, deren Breite c mehr als 10 mm beträgt. Die Ansaugöffnungen 30d besitzen Teilflächen F₂ und F₃. Die Ansaugfläche F ist ein Flächeninhalt und ergibt sich als Summe der Teilflächen F₁, F₂ und F₃. Die Anlagefläche 40 bezeichnet den Ort, also die Fläche, in der die Ansaugfläche F liegt.

Die Ansaugfläche F beträgt mindestens 50% der Fläche der Unterseite 36 der Bodenplatte 5. Die Fläche der Unterseite der Bodenplatte 5 ist dabei die Fläche, die das Unterteil 38 in einer Ansicht in y-Richtung, wie sie in Fig. 8 gezeigt ist, einnimmt. Vorteilhaft beträgt die Ansaugfläche F 70% bis 100% der Fläche der Unterseite 36 der Bodenplatte 5. Das Verhältnis der Ansaugfläche F zur Summe der Querschnittsflächen aller Durchtrittsöffnungen, im Ausführungsbeispiel zur Querschnittsfläche der Hauptdurchtrittsöffnung 25, beträgt vorteilhaft von 1 bis 5. Im Ausführungsbeispiel ist das Verhältnis deutlich größer als 1 und kann vorteilhaft von 3 bis 5 betragen.

Der Querschnitt der Hauptdurchtrittsöffnung beträgt vorteilhaft 20% bis 50% der Fläche der Unterseite 36 der Bodenplatte 5. Der Querschnitt einer Öffnung ist dabei an der engsten Stelle der Öffnung gemessen. Der Querschnitt der Hauptdurchtrittsöffnung 25 ist demnach höchstens halb so groß wie die Fläche der Unterseite 36 der Bodenplatte 5. Der Querschnitt der Hauptdurchtrittsöffnung 25 beträgt vorteilhaft 25% bis 40% der Fläche der Unterseite 36 der Bodenplatte 5. Im Ausführungsbeispiel beträgt der Querschnitt der Hauptdurchtrittsöffnung 25 25% bis 30% der Fläche der Unterseite 36 der Bodenplatte 5. Im Ausführungsbeispiel ist der Querschnitt der Hauptdurchtrittsöffnung 25 etwa konstant. Auch ein ungleichmäßiger Querschnitt der Hauptdurchtrittsöffnung 25, dessen Querschnittsfläche sich in Strömungsrichtung ändert, kann vorteilhaft sein. Der Querschnitt der Hauptdurchtrittsöffnung 25 ist dabei der Querschnitt der Öffnung in der Bodenplatte 5. Der effektive Strömungsquerschnitt kann insbesondere durch eine in die Hauptdurchtrittsöffnung 25 eintauchende Gebläsespirale 9 verringert sein. Der effektive Strömungsquerschnitt durch die Hauptdurchtrittsöffnung 25 beträgt vorteilhaft 10% bis 20%, insbesondere 10% bis 15% der Fläche der Unterseite 36 der Bodenplatte 5.

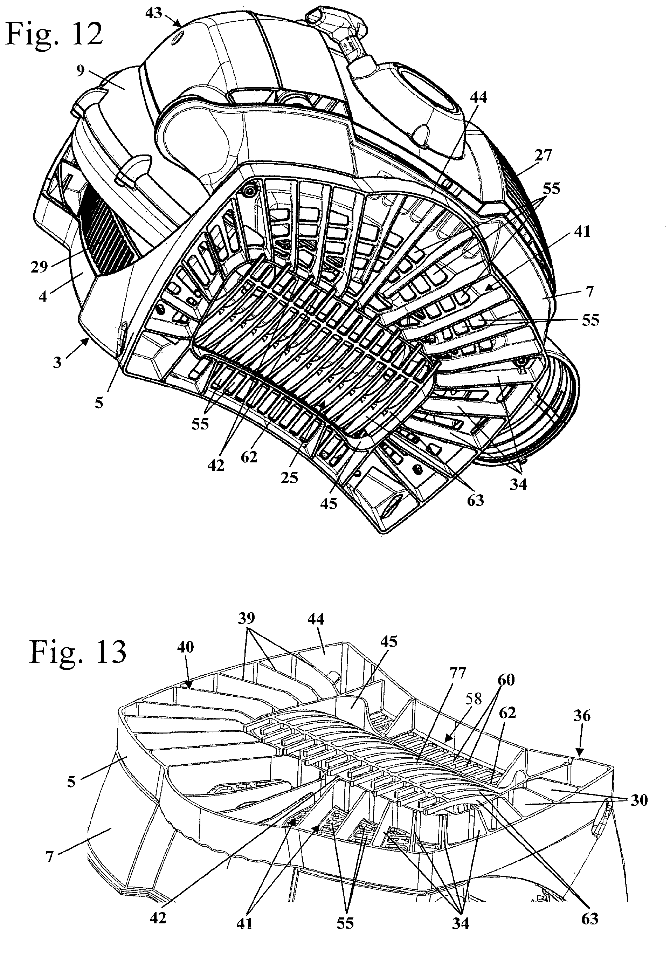

Wie Fig. 9 zeigt, verlaufen die Leitrippen 34 in Richtung auf die Hauptdurchtrittsöffnung 25. Zwischen den Leitrippen 34 sind Kanäle 41 gebildet, durch die die Luft aus dem Ansaugraum 58 (Fig. 4) zur Hauptdurchtrittsöffnung 25 geleitet wird. Im Ausführungsbeispiel verlaufen die Querrippen 33 etwa bogenförmig. Die Leitrippen 34 verlaufen strahlenförmig und in einer durch die z-Richtung und die x-Richtung aufgespannten Ebene in Richtung auf die Hauptdurchtrittsöffnung 25 (Fig. 4). Dabei enden einige der Leitrippen 34 bereits vor der Hauptdurchtrittsöffnung 25. Die beidseitig dieser Leitrippen 34 verlaufenden Kanäle 41 sind zusammengeführt und münden an einer gemeinsamen Mündungsöffnung 42 (Fig. 5) an der Hauptdurchtrittsöffnung 25. Die Querrippen 33 besitzen eine deutlich geringere Höhe als die Leitrippen 34. Die Leitrippen 34 leiten die Strömung zur Hauptdurchtrittsöffnung 25. Die Querrippen 33 stabilisieren die Leitrippen 34. Die Querrippen 33 ragen in die durch die Leitrippen 34 gebildeten Kanäle 41. Um die Strömung in den Kanälen 41 nur geringfügig zu behindern, besitzen die Querrippen 33 eine gegenüber den Längsrippen 34 deutlich verringerte Höhe. Es kann auch vorteilhaft sein, die Bodenplatte 5 ohne Querrippen 33 auszubilden. Eine entsprechende Gestaltung ist im Ausführungsbeispiel nach Fig. 12 gezeigt, welches nachfolgend noch näher beschrieben wird.

Die Stirnseiten 39 der Querrippen 33 und der Leitrippen 34 liegen in einer Ebene (Figuren 4 und 8) und bilden die Anlagefläche 40. Es kann auch zweckmäßig sein, dass die Stirnseiten 39 der Längsrippen 34 und der Querrippen 33 in unterschiedlichen Ebenen enden, wobei zumindest ein Teil dieser Ebenen unterhalb einer Unterkante der Umfangswand einer Durchtrittsöffnung, insbesondere der Umfangswand 45 der Hauptdurchtrittsöffnung 25, liegt. Die Höhe kann dabei innerhalb einer Längsrippe 34 oder einer Querrippe 33 variieren. Die Höhe kann zwischen Querrippen 33 und Längsrippen 34 unterschiedlich sein. Es können aber auch Längsrippen 34 unterschiedlicher Höhe vorgesehen sein. Ebenso können Querrippen 33 unterschiedlicher Höhe vorteilhaft sein. Die Höhe ist vorteilhaft an die gewünschte Form und Lage der Anlagefläche 40 angepasst gewählt.

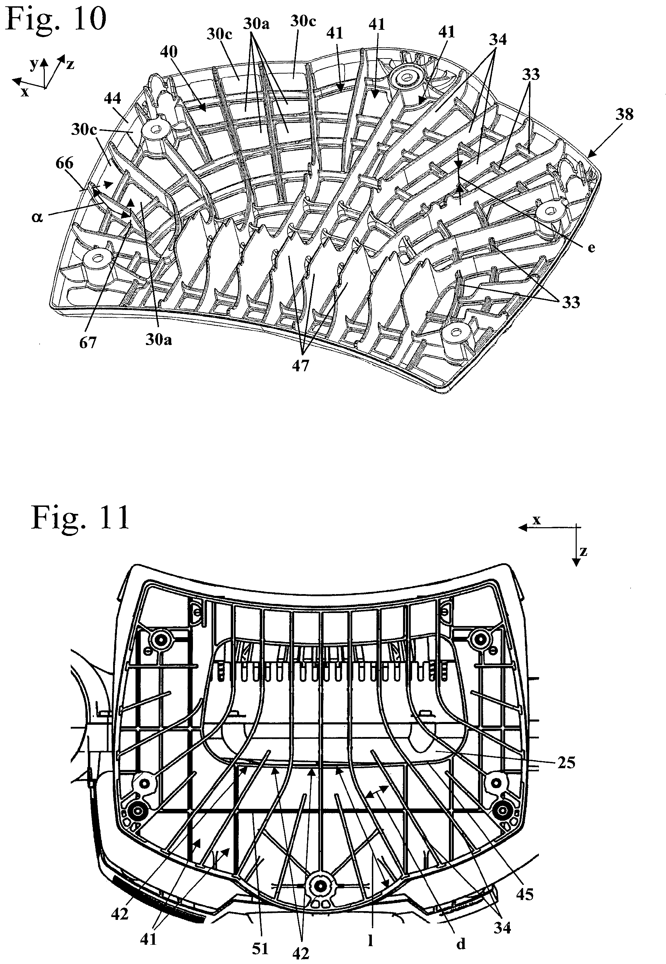

Wie die Figuren 9 und 10 zeigen, besitzen einige der Leitrippen 34 Fortsätze 47. Die Fortsätze 47 ragen in die Hauptdurchtrittsöffnung 25, wie Fig. 4 zeigt. An einigen der Fortsätzen 47 ist eine Vertiefung 48 zur Aufnahme der Umfangswand 45 vorgesehen. In Fig. 9 ist exemplarisch die Länge 1 eines Kanals 41 von der Umfangswand 44 bis zu einer Mündungsöffnung 42, an der der Kanal 41 in die Hauptdurchtrittsöffnung 25 (Fig. 3) mündet, eingezeichnet.

Wie Fig. 10 zeigt, erstrecken sich die Längsseiten der Kanäle 41 vorteilhaft bis an die Umfangswand 44 der Bodenplatte 5 und bis an die Ansaugöffnungen 30c. In mindestens einen Kanal 41 münden vorteilhaft Ansaugöffnungen 30a, 30b, 30c, 30d, in die Arbeitsluft aus unterschiedlichen Richtungen einströmt. In die Ansaugöffnungen 30c strömt die angesaugte Luft in einer Strömungsrichtung ein, die eine Komponente in x-Richtung und/oder in z-Richtung besitzt. Die Einströmrichtungen durch die in einen Kanal 41 mündenden Ansaugöffnungen 30 liegen vorteilhaft winklig zueinander, so dass der Kanal 41 aus unterschiedlichen Richtungen gespeist wird. In Fig. 10 ist exemplarisch die Strömungsrichtung 66 durch eine Ansaugöffnung 30c gezeigt, die im Wesentlichen in x-Richtung und in y-Richtung liegt, aber auch Richtungsanteile in z-Richtung besitzen kann. Durch eine Ansaugöffnung 30a, die in den gleichen Kanal 41 mündet, strömt angesaugte Luft in einer Strömungsrichtung 67. Die Strömungsrichtungen 66 und 67 schließen einen Winkel α ein. Vorteilhaft liegt der Winkel α zwischen 30° und 90°, insbesondere zwischen 45° und 80°. Die Kanäle 41 besitzen eine in Abstellposition 32 (Fig. 1) gemessene Tiefe e, die vorteilhaft mindestens 5 mm, insbesondere mindestens 10 mm beträgt.

In der Schnittdarstellung in Fig. 11 sind die Kanäle 41 und die Mündungsöffnungen 42 der Kanäle 41 im Einzelnen gezeigt. Wie Fig. 11 auch zeigt, liegen die Versteifungsrippen 51 des Oberteils 37 quer zu den Kanälen 41. Der in der Ebene der Versteifungsrippen 51 liegende Bereich bildet damit keinen Abschnitt der Kanäle 41. Vorteilhaft beträgt die Länge 1 mindestens eines Kanals 41 mindestens 5 cm, insbesondere mindestens 8 cm. Vorteilhaft besitzt mehr als die Hälfte der Kanäle 41 eine Länge 1 von mindestens 5 cm, insbesondere mindestens 8 cm. Der Kanal 41 besitzt vorteilhaft eine Breite d von mindestens 10 mm, insbesondere mindestens 20 mm. Die Länge 1 des Kanals 41 ist vorteilhaft so gewählt, dass die zur Unterseite 36 teilweise offene, die Ansaugöffnungen 30 aufweisende Längsseite des Kanals 41 nicht vollständig von einem einzigen Blatt abgedeckt werden kann. Dadurch wird ein vollständiges Verschließen eines Kanals 41 durch ein Blatt verhindert. Gleichzeitig wird sichergestellt, dass an einem einzigen Blatt kein übermäßig großer Unterdruck erzeugt werden kann, da seitlich des Blatts noch Arbeitsluft angesaugt werden kann. Dadurch kann ein an die Anlagefläche 40 angesaugtes Blatt wieder von der Anlagefläche 40 abfallen, insbesondere dann, wenn die Leistung des Verbrennungsmotors verringert wird, beispielsweise durch Loslassen des Gashebels. Die Tiefe e und die Breite d der Kanäle 41 sind so gewählt, dass ein Verschließen des Kanals 41 durch ein Blatt nicht möglich ist. Vorteilhaft sind Tiefe e und Breite d so ausgelegt, dass kein Blatt in den Kanal 41 hineingezogen und den Kanal 41 dadurch verschließen kann. Es kann auch vorteilhaft sein, die Breite d der Kanäle 41 größer zu wählen, so dass sich zwar ein Blatt in den Kanal 41 wölben kann, das Blatt den Kanal 41 aber nicht vollständig verschließen kann.

Der Strömungsquerschnitt der Mündungsöffnungen 42 ist deutlich kleiner als die Summe der Strömungsquerschnitte der in den betreffenden Kanal 41 mündenden Ansaugöffnungen 30. Der Strömungsquerschnitt der Mündungsöffnung 42 beträgt vorteilhaft höchstens 50% der Fläche der an diesem Kanal 41 angeordneten Ansaugöffnungen 30. Bevorzugt beträgt der Strömungsquerschnitt der Mündungsöffnung 42 höchstens 40%, insbesondere höchstens 30% der Fläche der an diesem Kanal 41 angeordneten Ansaugöffnungen 30.

Im Ausführungsbeispiel nach den Figuren 1 bis 11 liegt die Anlagefläche 40 in Abstellposition 32 unmittelbar benachbart zur Abstellfläche 31. Ein geringer Abstand zwischen Anlagefläche 40 und Abstellfläche 31 kann durch an der Anlagefläche 40 angeordnete Standfüße erreicht werden. Der Abstand zwischen der Anlagefläche 40 und der Abstellfläche 31 beträgt vorteilhaft weniger als 20 mm, insbesondere weniger als 10 mm.

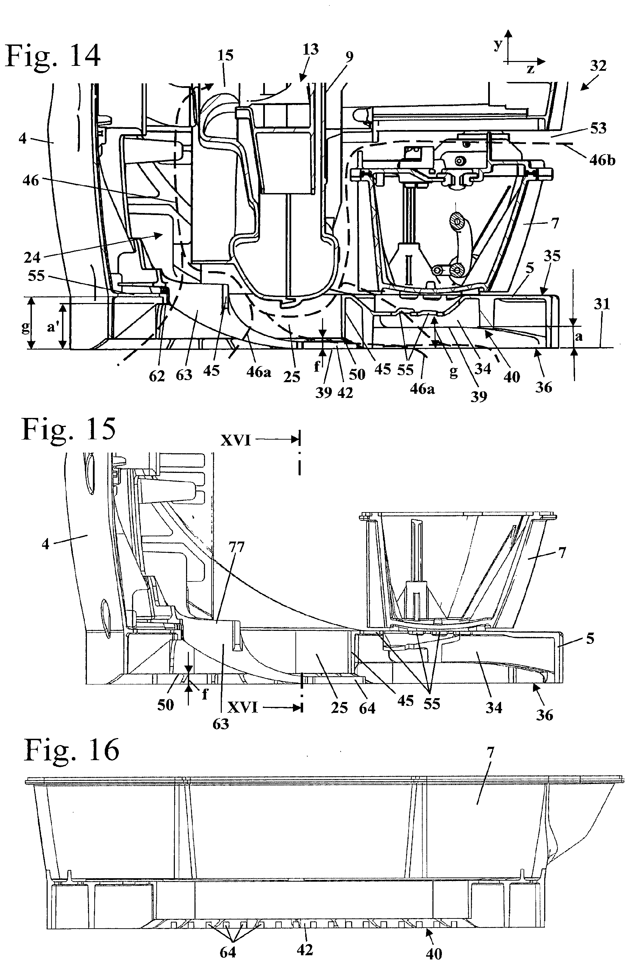

Die Figuren 12 bis 18 zeigen ein weiteres Ausführungsbeispiel eines Blasgeräts 1. Gleiche Bezugszeichen kennzeichnen dabei in allen Ausführungsbeispielen einander entsprechende Elemente. Das in Fig. 12 gezeigte Blasgerät 1 besitzt eine Rückentrage 3, bei der Rückenplatte 4 und Bodenplatte 5 einteilig ausgebildet sind. Die Bodenplatte 5 besitzt eine Umfangswand 44 sowie eine Hauptdurchtrittsöffnung 25.Die Hauptdurchtrittsöffnung 25 ist im Ausführungsbeispiel in einem mittleren Bereich, also zentral, aber nicht zentriert, sondern außermittig angeordnet. In der Bodenplatte 5 ist außerdem eine Vielzahl von Nebendurchtrittsöffnungen 55 vorgesehen. Im Ausführungsbeispiel sind die Nebendurchtrittsöffhungen 55 rings um die Hauptdurchtrittsöffnung 25 angeordnet. Die Bodenplatte 5 besitzt eine Vielzahl von Leitrippen 34, die sich etwa strahlenförmig in x-z-Ebene in Richtung auf die Hauptdurchtrittsöffnung 25 erstrecken. Querrippen 33, die sich von der Oberseite 35 in den Ansaugraum 58 erstrecken, sind nicht vorgesehen. Bei einer benachbarten Anordnung mehrerer Nebendurchtrittsöffnungen 55 an einem gemeinsamen Kanal 41 sind im Ausführungsbeispiel Querstege 60 gebildet. Die Querstege 60 erstrecken sich nicht von der die Oberseite 35 bildenden Wand in den Ansaugraum 58, der sich zwischen der Anlagefläche 40 und dieser Wand erstreckt. Die Querstege 60 werden deshalb vorliegend nicht als Querrippe 33 betrachtet. Aufgrund der einteiligen Ausbildung der Leitrippen 34 mit der Oberseite 35 der Bodenplatte 5 (Fig. 14) sind Querrippen 33 nicht erforderlich. In der Anlagefläche 40 liegen mit Ausnahme des Bereichs der Hauptdurchtrittsöffnung 25 ausschließlich Stirnseiten 39 von Leitrippen 34. In der Hauptdurchtrittsöffnung 25 sind weitere Rippen 63 vorgesehen, deren Stirnseiten eine Anlagefläche für Laub bilden. Die Rippen 63 sind im Ausführungsbeispiel an einem Gitter 77 ausgebildet, das als separates Bauteil ausgebildet und in die Hauptdurchtrittsöffnung 25 eingesetzt ist. Auch eine einteilige Ausbildung der Rippen 63 mit der Umfangswand 45 der Hauptdurchtrittsöffnung 25 kann vorteilhaft sein. Ein sich über die gesamte Unterseite 36 erstreckendes Gitter 57 mit Leitrippen 34 und Querrippen 33 wie beim Ausführungsbeispiel nach den Figuren 1 bis 11 ist nicht vorgesehen.

Die zwischen den Rippen 34 gebildeten Kanäle 41 münden an Mündungsöffnungen 42 (Fig. 13) zwischen den Rippen 63 sowie durch die Nebendurchtrittsöffnungen 55 an die Oberseite 35 (Fig. 14) der Bodenplatte 5. Die Hauptdurchtrittsöffnung 25 besitzt eine Umfangswand 45, die an dem der Rückenplatte 4 benachbarten Bereich eine Aussparung 62 aufweist. In diesem Bereich besitzt die Umfangswand 45 nur eine sehr geringe Höhe. Dies ist auch in Fig. 13 gezeigt. Wie die Figuren 12 und 13 auch zeigen, besitzt die Umfangswand 44 eine näherungsweise konstante Höhe. Die Ansaugöffnungen 30 werden durch die zur Unterseite 36 hin offene Längsseite der Kanäle 41 gebildet. Es kann auch vorgesehen sein, dass die Umfangswand 44 Ansaugöffnungen aufweist, die in die Kanäle 41 münden. Die Anlagefläche 40 verläuft im Ausführungsbeispiel nach den Figuren 12 bis 19 nicht eben, sondern folgt dem Verlauf der Stirnseiten 39 der Rippen 34 und 63. Die Anlagefläche 40 besitzt dadurch eine unregelmäßige Kontur. Die Anlagefläche 40 wird jeweils durch die kürzeste Verbindung der Stirnseiten 39 einander benachbarter Rippen 34, 63 gebildet. Die Stirnseiten 39 der Rippen liegen auch in diesem Ausführungsbeispiel unterhalb einer Unterkante einer zugeordneten Durchtrittsöffnung 25, 55. Auf diese Weise kommt angesaugtes Laub oder dgl. bereits an der Stirnseite 39 der Rippen 33, 34 zur Anlage und kann die Durchtrittsöffnung 25, 55 nicht verschließen. Einer Durchtrittsöffnung 25, 55 sind vorteilhaft mehrere Ansaugöffnungen 30 zugeordnet. Die Summe der Flächen der Ansaugöffnungen 30 ist vorteilhaft größer als die Summe der Querschnittsflächen der Durchtrittsöffnungen 25, 55.

Wie Fig. 14 zeigt, wird auch bei diesem Ausführungsbeispiel ein Luftstrom entlang des Pfeils 46 in die Eintrittsöffnung 15 des Gebläses 13 angesaugt. Dabei wird ein Teilluftstrom 46a von der Unterseite 36 der Bodenplatte 5 angesaugt und ein weiterer, vorteilhaft kleinerer Teilluftstrom 46b durch die Spalte 53 und 54. Der Teilluftstrom 46a kann dabei von unterschiedlichen Bereichen der Bodenplatte 5 angesaugt werden und unterschiedliche Strömungswege durch die Bodenplatte 5 nehmen. Dies ist abhängig von den Strömungswiderständen und davon, welche Bereiche durch angesaugtes Laub bedeckt sind. In Fig. 14 sind unterschiedliche Strömungswege für den Teilluftstrom 46a, der sich aus mehreren Teilströmen zusammensetzen kann, exemplarisch gezeigt.

Wie Fig. 14 auch zeigt, strömt die Luft aus Kanälen 41 durch die Mündungsöffnungen 42 an der Unterseite 36 in die Hauptdurchtrittsöffnung 25 oder durch Nebendurchtrittsöffnungen 55 in den Bereich unterhalb des Betriebsmitteltanks 7 und von dort unter der Gebläsespirale 9 hindurch und durch die Hauptdurchtrittsöffnung 25 in den Zwischenraum 24. Bei weiteren Nebendurchtrittsöffnungen 55, die im Bereich der Rückenplatte 4 angeordnet sind, strömt die angesaugte Luft direkt in den Zwischenraum 24.

Wie Fig. 14 auch zeigt, ist die Bodenplatte 5 als nach unten offenes, verripptes Profil mit einer bis auf die Durchtrittsöffnungen 25, 55 geschlossenen Oberseite 35 und einer verrippten, nach unten offenen Unterseite 36 ausgebildet. Die Durchtrittsöffnungen 25, 55 sind durch Ausbrüche in der Bodenplatte 5 gebildet. Die Ansaugöffnungen 30 spannen sich zwischen den Stirnseiten 39 der Rippen 34 und 63 auf. Die Stirnseiten 39 der Rippen 34, 63 und damit auch die Anlagefläche 40 besitzen zur Abstellfläche 31 einen senkrecht zur Abstellfläche 31 gemessenen Abstand a. Der Abstand a beträgt vorteilhaft weniger als 20 mm, insbesondere weniger als 10 mm. Auch ein Abstand von Null kann vorteilhaft sein. An der Aussparung 62 kann sich ein größerer Abstand a' ergeben. Die Umfangswand 45 der Hauptdurchtrittsöffnung 25 besitzt eine Unterkante 50, die zur Abstellfläche 31 einen senkrecht zur Abstellfläche 31 gemessenen Abstand f besitzt. Die im Bereich der Hauptdurchtrittsöffnung 25 zwischen den Rippen 63 gebildeten Ansaugöffnungen 30 besitzen in dem Bereich, in dem in Fig. 14 der Abstand f gemessen ist, keinen Abstand zur Abstellfläche 31, sondern liegen in der Abstellfläche 31. Im Bereich der Aussparung 62 ist der Abstand auf den Abstand a' vergrößert. Die Nebendurchtrittsöffnungen 55 besitzen zur Abstellfläche 31 einen Abstand g, der ebenfalls senkrecht zur Abstellfläche 31 gemessen ist. Dabei können sich unterschiedliche Abstände g bei unterschiedlichen Nebendurchtrittsöffnungen 55 ergeben. Der Abstand f an der Hauptdurchtrittsöffnung 25 ist insbesondere geringer als der Abstand g an mindestens einer Nebendurchtrittsöffnung 55. Der Abstand f, g an der Durchtrittsöffnung beträgt vorteilhaft mindestens das Doppelte des Abstands a, a' einer zugeordneten Ansaugöffnung 30. Eine zugeordnete Ansaugöffnung 30 ist dabei eine Ansaugöffnung 30, die mit der Durchtrittsöffnung 25, 55 über eine oberhalb der Anlagefläche 40 liegende Strömungsverbindung verbunden ist. Zugeordnete Abstände a bzw. a' und f bzw. g sind nächstliegend zueinander und senkrecht zur Abstellfläche 31 gemessen. Die Umfangswand 45 der Hauptdurchtrittsöffnung 25 besitzt an der Aussparung 62 zur Abstellfläche 31 den Abstand a'. Der Abstand a' ist größer als der Abstand g von Nebendurchtrittsöffnungen 55 an der gegenüberliegenden Seite der Hauptdurchtrittsöffnung 25. Der Abstand a' ist jedoch kleiner als der Abstand g der zugeordneten, zwischen Hauptdurchtrittsöffnung 25 und Rückenplatte 4 angeordneten Nebendurchtrittsöffnung 55. Dadurch, dass der Abstand f, g einer Durchtrittsöffnung 25, 55 größer als der Abstand a, a' einer zugeordneten Ansaugöffnung 30 zur Abstellfläche 31 ist, kann Luft von der Ansaugöffnung 30 durch eine oberhalb der Anlagefläche 40 gebildete Strömungsverbindung zur zugeordneten Durchtrittsöffnung 25, 55 strömen.

Die Figuren 15 und 16 zeigen die Gestaltung der Rippen 63 in der Hauptdurchtrittsöffnung 25 im Einzelnen. Die Rippen 63 besitzen eine geschwungene Gestalt. Die Rippen 63 besitzen einen freien Endabschnitt 64, der unter die Umfangswand 45 der Hauptdurchtrittsöffnung 25 ragt. Zwischen den Endabschnitten 64 der Rippen 63 sind die Mündungsöffnungen 42 der Kanäle 41 gebildet. Dies ist auch in Fig. 16 gezeigt. Fig. 16 zeigt auch die Anlagefläche 40, die an den Rippen 63 gebildet ist.

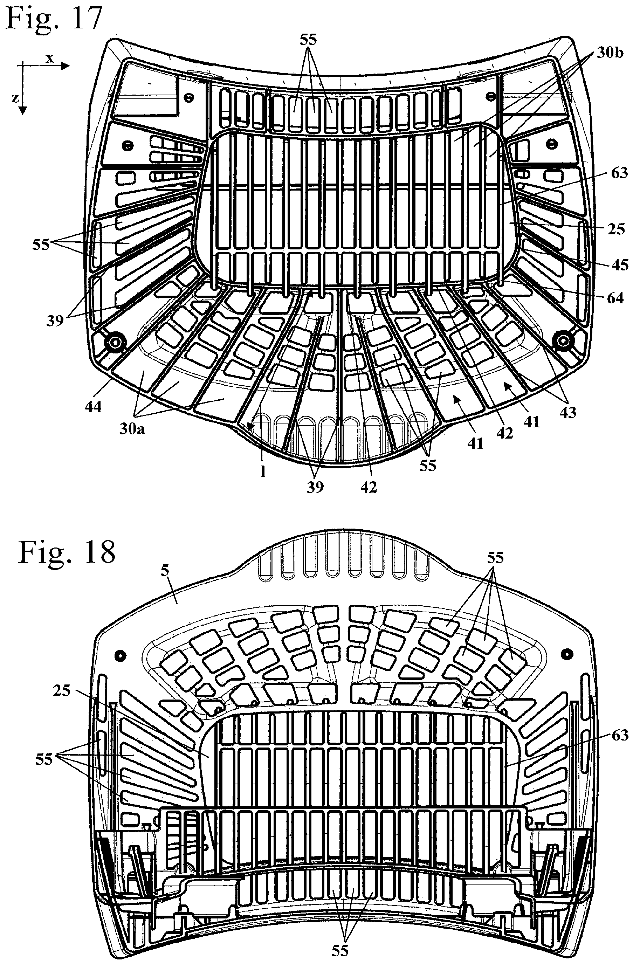

Wie Fig. 17 zeigt, sind zwischen den Rippen 63 in der Hauptdurchtrittsöffnung 25 Ansaugöffnungen 30b gebildet, die in Blickrichtung parallel zu y-Achse in Überdeckung mit der Hauptdurchtrittsöffnung 25 liegen. Zwischen den Leitrippen 34 sind Ansaugöffnungen 30a gebildet, die außerhalb der Hauptdurchtrittsöffnung 25 liegen. Die Ansaugöffnungen 30a bilden jeweils eine Längsseite eines Kanals 41. Die Kanäle 41 besitzen vorteilhaft eine Länge 1, die mindestens 5 cm, vorteilhaft mindestens 8 cm beträgt. Die Tiefe und Breite der Kanäle 41 entspricht vorteilhaft den zum vorangegangenen Ausführungsbeispiel genannten Abmessungen.

Wie Fig. 17 zeigt, erstrecken sich die Ansaugöffnungen 30a und 30b über den Großteil der Fläche der Unterseite 36 der Bodenplatte 5. Die Summe der Flächen aller Ansaugöffnungen 30 zuzüglich der Stirnseiten 39 von Rippen, deren Breite weniger als 10 mm beträgt, bildet eine Ansaugfläche F, die mindestens 50% der Fläche der Unterseite 36 der Bodenplatte 5 beträgt. Die Ansaugfläche F beträgt vorteilhaft 70% bis 100% der Fläche der Unterseite 36 der Bodenplatte 5. Im Ausführungsbeispiel entspricht die Ansaugfläche F der gesamten Fläche der Unterseite 36 abzüglich der Umfangswand 44. Es kann auch vorgesehen sein, dass die Ansaugfläche F größer als die Fläche der Unterseite 36 ist. Als vorteilhaft wird eine Ansaugfläche F von 70% bis 120% der Fläche der Unterseite 36 der Bodenplatte 5 angesehen. Die Fläche der Unterseite 36 der Bodenplatte ist in einer Ansicht senkrecht von der Abstellfläche 31 in Abstellposition 32 gemessen. Die Fläche der Unterseite 36 bezeichnet den Flächeninhalt der Projektion der Unterseite 36 auf die ebene Abstellfläche 31. Die tatsächliche Fläche der Unterseite 36 lässt sich aufgrund des unregelmäßigen Verlaufs der Unterseite 36, der sich unter anderem aufgrund der Rippen 33, 34 und der Neigungen und Wölbungen ergibt, nur schwer bestimmen. Die Anlagefläche 40 kann gewölbt sein, so dass einige der Ansaugöffnungen 30 mindestens teilweise quer zur Abstellfläche 31, insbesondere in der Umfangswand 44 der Bodenplatte 5, liegen. Die tatsächliche Ansaugfläche F kann damit einen größeren Flächeninhalt als die Fläche der Unterseite 36 der Bodenplatte 5 aufweisen. Eine Ansaugfläche F, die mehr als 100% der Fläche der Unterseite 36 der Bodenplatte 5 aufweist, ergibt sich insbesondere, wenn Ansaugöffnungen 30 mindestens teilweise in der Umfangswand 44 der Bodenplatte 5 liegen.

Im Ausführungsbeispiel wird die Ansaugfläche F lediglich von den Stirnseiten 39 der Rippen 34 und 63 unterbrochen. Die Summe der Querschnittsflächen aller Durchtrittsöffnungen, also der Hauptdurchtrittsöffnung 25 und aller Nebendurchtrittsöffnungen 55 beträgt vorteilhaft von 20% bis 50% der Fläche der Unterseite 36 der Bodenplatte 5. Die Hauptdurchtrittsöffnung 25 ist die Durchtrittsöffnung mit der größten Querschnittsfläche. Durch die Hauptdurchtrittsöffnung 25 wird der größte Anteil von Arbeitsluft von der Unterseite 36 auf die Oberseite 35 der Bodenplatte 5 gesaugt. Die Hauptdurchtrittsöffnung 25 ist im Ausführungsbeispiel die Durchtrittsöffnung, in die die Gebläsespirale 9 eintaucht. Durch jede der Nebendurchtrittsöffnungen 55 wird ein geringerer Anteil von Arbeitsluft angesaugt. Die Ansaugfläche F ist im Ausführungsbeispiel mindestens doppelt so groß wie der Querschnitt der Hauptdurchtrittsöffnung 25. Das Verhältnis der Ansaugfläche F zur Summe der Querschnittsflächen aller Durchtrittsöffnungen 25, 55 beträgt vorteilhaft von 1 bis 5. Der Strömungsquerschnitt einer, insbesondere jeder Mündungsöffnung 42 beträgt vorteilhaft höchstens 50% der Fläche der an diesem Kanal 41 angeordneten Ansaugöffnungen 30. Im Ausführungsbeispiel nach den Figuren 12 bis 19 sind die Kanäle 41 über die der Unterseite 36 zugewandte Seite offen, so dass die gesamte Längsseite des Kanals 41 die Ansaugöffnung 30 bildet. Es kann auch vorteilhaft sein, dass auch mindestens eine Ansaugöffnung 30c an der Umfangswand 44 der Bodenplatte 5 gebildet ist. Der Strömungsquerschnitt der Mündungsöffnung 42 beträgt vorteilhaft weniger als 30% der Fläche der am jeweiligen Kanal 41 ausgebildeten Ansaugöffnung 30. Vorteilhaft wird mindestens eine Mündungsöffnung des Kanals durch eine Nebendurchtrittsöffnung gebildet.

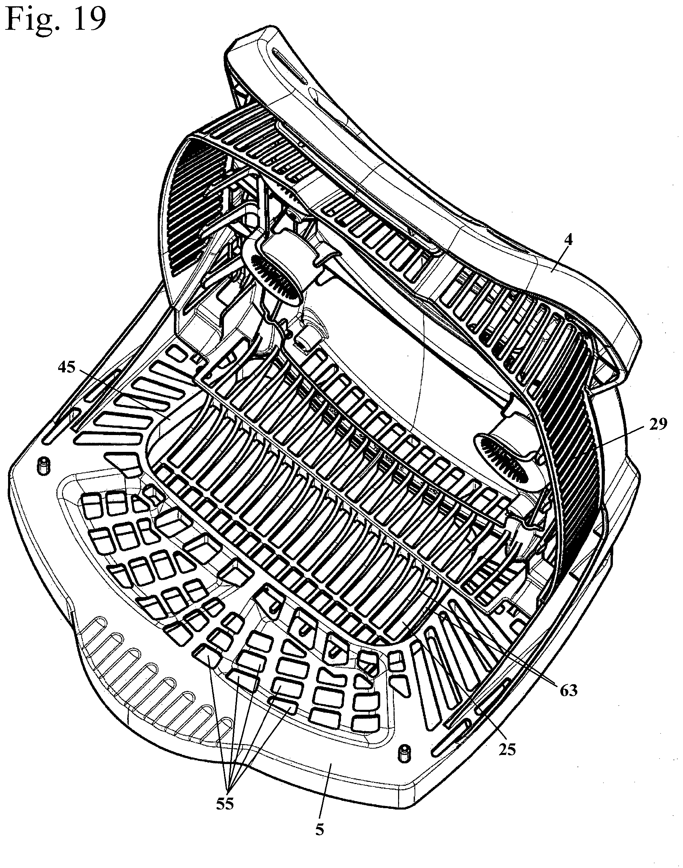

In Fig. 18 sind die Nebendurchtrittsöffnungen 55 gezeigt. Eine Vielzahl von Nebendurchtrittsöffnungen 55 ist in dem Bereich der Bodenplatte 5 angeordnet, über dem der Betriebsmitteltank 7 (Fig. 15) liegt. Die Anordnung der Nebendurchtrittsöffnungen 55 und der Hauptdurchtrittsöffhung 25 ist auch in Fig. 19 gezeigt.

Die gezeigten Ausführungsbeispiele können in beliebiger Kombination ihrer Merkmale weitere vorteilhafte Gestaltungen bilden. Die Anordnung und Art von Gebläsespirale, Antriebsmotor, Betriebsmitteltank und weiteren Komponenten kann im Rahmen des fachmännischen Handels abgewandelt werden und beschränkt sich nicht auf die offenbarten Ausführungsbeispiele. Insbesondere eine Anordnung mit liegend an der Bodenplatte befestigter Gebläsespirale kann zweckmäßig sein.

## Patentansprüche

1. Rückengetragenes Arbeitsgerät mit einem Antriebsmotor (8) und mit einem von dem Antriebsmotor angetriebenen Gebläse (13), das einen Arbeitsluftstrom fördert, mit einer Rückentrage (3), die eine Rückenplatte (4) und eine Bodenplatte (5) umfasst, wobei die Bodenplatte (5) eine dem Gebläse (13) und dem Antriebsmotor (8) zugewandte Oberseite (35) und eine dem Gebläse (13) und dem Antriebsmotor (8) abgewandte Unterseite (36) besitzt, wobei die Bodenplatte (5) mindestens eine Durchtrittsöffnung besitzt, durch die Arbeitsluft von dem Gebläse (13) von der Unterseite (36) durch die Bodenplatte (5) zur Oberseite (35) der Bodenplatte (5) gesaugt wird,
**dadurch gekennzeichnet, dass** an der Unterseite (36) der Bodenplatte (5) Rippen verlaufen, deren der Oberseite (35) abgewandt liegende Stirnseiten (39) eine Anlagefläche (40) für angesaugte Blätter bilden, dass an der Unterseite (36) der Bodenplatte (5) mindestens eine Ansaugöffnung (30) angeordnet ist, über die der Arbeitsluftstrom von dem Gebläse (13) aus der Umgebung durch die mindestens eine Durchtrittsöffnung angesaugt wird, wobei die mindestens eine Ansaugöffnung (30) zwischen den Stirnseiten (39) der Rippen in der Anlagefläche (40) liegt und durch mindestens eine auf der dem Gebläse (13) zugewandten Seite der Anlagefläche (40) liegende Strömungsverbindung mit der mindestens einen Durchtrittsöffnung verbunden ist, dass das Arbeitsgerät eine Ansaugfläche besitzt, die die Summe der Flächen aller Ansaugöffnungen (30) und aller zwischen den Ansaugöffnungen (30) verlaufenden Stirnseiten (39) von Rippen mit einer Breite (b) von weniger als 10 mm ist, und dass die Ansaugfläche mindestens 50% der Fläche der Unterseite (36) der Bodenplatte (5) beträgt.

2. Arbeitsgerät nach Anspruch 1
**dadurch gekennzeichnet, dass** die Ansaugfläche (F) 70% bis 120% der Fläche der Unterseite (36) der Bodenplatte (5) beträgt.

3. Arbeitsgerät nach Anspruch 1 oder 2,
**dadurch gekennzeichnet, dass** die Summe der Querschnittsflächen aller Durchtrittsöffnungen von 20% bis 80% der Fläche der Unterseite (36) der Bodenplatte (5) beträgt.

4. Arbeitsgerät nach einem der Ansprüche 1 bis 3,
**dadurch gekennzeichnet, dass** eine Durchtrittsöffnung eine Hauptdurchtrittsöffnung (25) ist, durch die der größte Anteil von Arbeitsluft von der Unterseite (36) auf die Oberseite (35) der Bodenplatte (5) gesaugt wird.

5. Arbeitsgerät nach Anspruch 4,
**dadurch gekennzeichnet, dass** die Ansaugfläche mindestens doppelt so groß ist wie der minimale Querschnitt der Hauptdurchtrittsöffnung (25).

6. Arbeitsgerät nach Anspruch 4 oder 5,
**dadurch gekennzeichnet, dass** das Gebläse (13) eine Gebläsespirale (9) besitzt, die in die Hauptdurchtrittsöffnung (25) eintaucht.

7. Arbeitsgerät nach einem der Ansprüche 4 bis 6,
**dadurch gekennzeichnet, dass** das Gebläse (13) eine der Rückenplatte (4) zugewandte Eintrittsöffnung (15) besitzt, wobei zwischen der Rückenplatte (4) und der Eintrittsöffnung (15) ein Zwischenraum (24) gebildet ist, und dass die durch die Hauptdurchtrittsöffnung (25) angesaugte Arbeitsluft aus der Hauptdurchtrittsöffnung (25) unmittelbar in den Zwischenraum (24) zwischen der Rückenplatte (4) und der Eintrittsöffnung (15) eintritt.

8. Arbeitsgerät nach einem der Ansprüche 4 bis 7,
**dadurch gekennzeichnet, dass** an der Unterseite (36) der Bodenplatte (5) mindestens ein Kanal (41) gebildet ist, der mindestens teilweise von den Rippen begrenzt ist und an dessen der Unterseite (36) zugewandter Seite mindestens eine Ansaugöffnung (30) angeordnet ist.

9. Arbeitsgerät nach Anspruch 8,
**dadurch gekennzeichnet, dass** der Kanal in Richtung auf die Hauptdurchtrittsöffnung (25) verläuft.

10. Arbeitsgerät nach Anspruch 8 oder 9,
**dadurch gekennzeichnet, dass** die Länge (1) der der Unterseite (36) zugewandten Seite des Kanals (41) mindestens 5 cm beträgt.

11. Arbeitsgerät nach einem der Ansprüche 8 bis 10,
**dadurch gekennzeichnet, dass** der Kanal (41) mindestens eine Mündungsöffnung (42) besitzt, über die der Kanal (41) mit der Hauptdurchtrittsöffnung (25) verbunden ist, wobei der Strömungsquerschnitt der Mündungsöffnung (42) höchstens 50% der Fläche der an diesem Kanal (41) angeordneten Ansaugöffnungen (30) beträgt.

12. Arbeitsgerät nach Anspruch 11,
**dadurch gekennzeichnet, dass** die Mündungsöffnung (42) an einer Umfangswand (45) der Hauptdurchtrittsöffnung (25) angeordnet ist.

13. Arbeitsgerät nach Anspruch 11,
**dadurch gekennzeichnet, dass** die Mündungsöffnung auf der Oberseite (35) der Bodenplatte (5) angeordnet ist und an der Oberseite (35) der Bodenplatte (5) mit der Hauptdurchtrittsöffhung (25) strömungsverbunden ist.

14. Arbeitsgerät nach einem der Ansprüche 1 bis 13,
**dadurch gekennzeichnet, dass** das Arbeitsgerät eine Abstellposition (32) besitzt, in der das Arbeitsgerät auf einer ebenen, horizontalen Abstellfläche (31) abgestellt ist.

15. Arbeitsgerät nach Anspruch 14,
**dadurch gekennzeichnet, dass** in Abstellposition (32) in einer Projektion senkrecht auf die Abstellfläche (31) mindestens eine Ansaugöffnung (30) außerhalb einer Durchtrittsöffnung liegt.

## Claims

1. Back-pack working implement with a drive motor (8) and a blower (13) driven by the drive motor and delivering a working air flow, with a back carrier (3) comprising a back plate (4) and a base plate (5), wherein the base plate (5) has a top side (35) facing the blower (13) and the drive motor (8) and an underside (36) remote from the blower (13) and the drive motor (8), wherein the base plate (5) has at least one through-opening through which the working air is drawn by the blower (13) from the underside (36) through the base plate (5) to the top side (35) of the base plate (5),
**characterised in that** ribs whose end faces (39) remote from the top side (35) form a locating surface (40) for drawn-in leaves extend at the underside (36) of the base plate (5), **in that** at least one intake opening (30), via which the working air flow is drawn by the blower (13) from the environment through the at least one through-opening, is located on the underside (36) of the base plate (5), wherein the at least one intake opening (30) lies between the end faces (39) of the ribs in the locating surface (40) and is connected to the at least one through-opening by at least one flow connection located on the side of the locating surface (40) which faces the blower (13), **in that** the working implement has an intake area being the sum of the areas of all intake openings (30) and all end faces (39) of ribs with a width of less than 10 mm extending between the intake openings (30), and **in that** the intake area amounts to at least 50% of the area of the underside (36) of the base plate (5).

2. Working implement according to claim 1,
**characterised in that** the intake area (F) amounts to 70% to 120% of the area of the underside (36) of the base plate (5).

3. Working implement according to claim 1 or 2,
**characterised in that** the sum of the cross-sectional areas of all through-openings amounts to 20% to 80% of the area of the underside (36) of the base plate (5).

4. Working implement according to any of claims 1 to 3,
**characterised in that** one through-opening is a main through-opening (25), through which the major part of working air is drawn from the underside (36) to the top side (35) of the base plate (5).

5. Working implement according to claim 4,
**characterised in that** the intake area is at least twice as large as the minimum cross-section of the main through-opening (25).

6. Working implement according to claim 4 or 5,
**characterised in that** the blower (13) has a blower volute (9), which dips into the main through-opening (25).

7. Working implement according to any of claims 4 to 6,
**characterised in that** the blower (13) has an inlet opening (15) facing the back plate (4), wherein a space (24) is formed between the back plate (4) and the inlet opening (15), and **in that** the working air drawn in through the main through-opening (25) enters the space (24) between the back plate (4) and the inlet opening (15) directly from the main through-opening (25).

8. Working implement according to any of claims 4 to 7,
**characterised in that** at least one passage (41), which is at least partially bounded by the ribs and on that side of which which faces the underside (36) an intake opening (30) is located, is formed on the underside (36) of the base plate (5).

9. Working implement according to claim 8,
**characterised in that** the passage extends in the direction of the main through-opening (25).

10. Working implement according to claim 8 or 9,
**characterised in that** the length (1) of the side of the passage (41) which faces the underside (36) is at least 5 cm.

11. Working implement according to any of claims 8 to 10,
**characterised in that** the passage (41) has at least one termination opening (42), via which the passage (41) is connected to the main through-opening (25), the flow cross-section of the termination opening (42) amounting to no more than 50% of the area of the intake openings (30) located on this passage (41).

12. Working implement according to claim 11,
**characterised in that** the termination opening (42) is located at a circumferential wall (45) of the main through-opening (25).

13. Working implement according to claim 11,
**characterised in that** the termination opening is located on the top side (35) of the base plate (5) and is flow-connected to the main through-opening (25) on the top side (35) of the base plate (5).

14. Working implement according to any of claims 1 to 13,
**characterised in that** the working implement has a parking position (32), in which the working implement is parked on a flat horizontal parking surface (31).

15. Working implement according to claim 14,
**characterised in that** in the parking position (32) at least one intake opening (30) lies outside a through-opening in a projection perpendicular to the parking surface (31).

## Revendications

1. Appareil de travail dorsal avec un moteur d'entraînement (8) et une soufflante (13), entraînée par le moteur d'entraînement, qui refoule un courant d'air de travail, avec un support dorsal (3) qui comprend une plaque dorsale (4) et une plaque formant fond (5), la plaque formant fond (5) comportant un côté supérieur (35) tourné vers la soufflante (13) et le moteur d'entraînement (8), et un côté inférieur (36) opposé à la soufflante (13) et au moteur d'entraînement (8), la plaque formant fond (5) présentant au moins une ouverture de passage par laquelle l'air de travail est aspiré par la soufflante (13), du côté inférieur (36) vers le côté supérieur (35) de ladite plaque (5), à travers celle-ci,
**caractérisé en ce que** sur le côté inférieur (36) de la plaque formant fond (5) s'étendent des nervures dont les côtés frontaux (39) opposés au côté supérieur (35) forment une surface d'application (40) pour des feuilles aspirées, **en ce qu'**il est prévu sur le côté inférieur (36) de la plaque formant fond (5) au moins une ouverture d'aspiration (30) par laquelle le courant d'air de travail est aspiré par la soufflante (13) à partir de l'environnement, à travers la ou les ouvertures de passage, la ou les ouvertures d'aspiration (30) se trouvant entre les côtés frontaux (39) des nervures, dans la surface d'application (40), et étant reliées à la ou aux ouvertures de passage par au moins une liaison d'écoulement qui se trouve sur le côté de la surface d'application (40) tourné vers la soufflante (13), **en ce que** l'appareil de travail présente une surface d'aspiration qui est égale à la somme des surfaces de toutes les ouvertures d'aspiration (30) et de tous les côtés frontaux (39), s'étendant entre ces dernières, des nervures d'une largeur (b) de moins de 10 mm, et **en ce que** la surface d'aspiration représente au moins 50% de la surface du côté inférieur (36) de la plaque formant fond (5).

2. Appareil de travail selon la revendication 1,
**caractérisé en ce que** la surface d'aspiration (F) représente 70% à 120% de la surface du côté inférieur (36) de la plaque formant fond (5).

3. Appareil de travail selon la revendication 1 ou 2,
**caractérisé en ce que** la somme des surfaces de section transversale de toutes les ouvertures de passage représente 20% à 80% de la surface du côté inférieur (36) de la plaque formant fond (5).

4. Appareil de travail selon l'une des revendications 1 à 3,
**caractérisé en ce qu'**une ouverture de passage est une ouverture de passage principale (25) par laquelle la majeure partie de l'air de travail est aspirée à partir du côté inférieur (36) jusqu'au côté supérieur (35) de la plaque formant fond (5).

5. Appareil de travail selon la revendication 4,
**caractérisé en ce que** la surface d'aspiration est au moins deux fois plus grande que la section transversale minimale de l'ouverture de passage principale (25).

6. Appareil de travail selon la revendication 4 ou 5,
**caractérisé en ce que** la soufflante (13) comporte une volute de soufflante (9) qui entre dans l'ouverture de passage principale (25).

7. Appareil de travail selon l'une des revendications 4 à 6,
**caractérisé en ce que** la soufflante (13) présente une ouverture d'entrée (15) tournée vers la plaque dorsale (4), un espace intermédiaire (24) étant formé entre la plaque dorsale (4) et ladite ouverture d'entrée (15), et **en ce que** l'air de travail aspiré par l'ouverture de passage principale (25) entre directement, à partir de ladite ouverture de passage (25), dans l'espace intermédiaire (24) entre la plaque dorsale (4) et l'ouverture d'entrée (15).

8. Appareil de travail selon l'une des revendications 4 à 7,
**caractérisé en ce qu'**il est prévu, formé sur le côté inférieur (36) de la plaque formant fond (5), au moins un canal (41) qui est délimité au moins en partie par les nervures et dont le côté tourné vers le côté inférieur (36) présente au moins une ouverture d'aspiration (30).

9. Appareil de travail selon la revendication 8,
**caractérisé en ce que** le canal s'étend en direction de l'ouverture de passage principale (25).

10. Appareil de travail selon la revendication 8 ou 9,
**caractérisé en ce que** la longueur (1) du côté du canal (41) tourné vers le côté inférieur (36) est d'au moins 5 cm.

11. Appareil de travail selon l'une des revendications 8 à 10,
**caractérisé en ce que** le canal (41) présente au moins une ouverture de débouché (42) par laquelle le canal (41) est relié à l'ouverture de passage principale (25), la section transversale d'écoulement de l'ouverture (42) représentant au maximum 50% de la surface des ouvertures d'aspiration (30) disposées sur ce canal (41).

12. Appareil de travail selon la revendication 11,
**caractérisé en ce que** l'ouverture de débouché (42) est disposée sur une paroi périphérique (45) de l'ouverture de passage principale (25).

13. Appareil de travail selon la revendication 11,
**caractérisé en ce que** l'ouverture de débouché est disposée sur le côté supérieur (35) de la plaque formant fond (5) et est reliée au niveau dudit côté supérieur (35) de la plaque formant fond (5) à l'ouverture de passage principale (25).

14. Appareil de travail selon l'une des revendications 1 à 13,
**caractérisé en ce que** ledit appareil de travail a une position d'entreposage (32) dans laquelle il est posé sur une surface horizontale plane (31).

15. Appareil de travail selon la revendication 14,
**caractérisé en ce que** dans la position d'entreposage (32), sur une projection perpendiculairement à la surface d'entreposage (32) au moins une ouverture d'aspiration (30) se trouve à l'extérieur d'une ouverture de passage.
